Europäisches Patentamt

European Patent Office

Office européen des brevets

(11) Numéro de publication : **0 289 374 B1**

# (12) FASCICULE DE BREVET EUROPEEN

(45) Date de publication du fascicule du brevet :
**29.07.92 Bulletin 92/31**

(51) Int. Cl.$^5$ : **B64C 27/51, B64C 27/37**

(21) Numéro de dépôt : **88400745.1**

(22) Date de dépôt : **28.03.88**

(54) **Dispositif de palier combiné pour rotor de giravion, et rotor équipé d'un tel dispositif de palier.**

(30) Priorité : **30.03.87 FR 8704381**

(43) Date de publication de la demande :
**02.11.88 Bulletin 88/44**

(45) Mention de la délivrance du brevet :
**29.07.92 Bulletin 92/31**

(84) Etats contractants désignés :
**DE GB IT**

(56) Documents cités :
**FR-A- 2 256 347
GB-A- 2 001 026
US-A- 2 949 967**

(73) Titulaire : **AEROSPATIALE SOCIETE
NATIONALE INDUSTRIELLE Société
Anonyme dite:
37, Boulevard de Montmorency
F-75016 Paris (FR)**

(72) Inventeur : **Aubry, Jacques Antoine
2, Avenue Marie Gasquet
F-13480 Cabries (FR)**
Inventeur : **Mondet, Jean Joseph
Le Senangue Centre Urbain
F-13127 Vitrolles (FR)**

(74) Mandataire : **Lhuillier, René et al
ARMENGAUD JEUNE CABINET LEPEUDRY
52, avenue Daumesnil
F-75012 Paris (FR)**

## Description

La présente invention a pour objet un dispositif de palier combiné, destiné à l'équipement des rotors à pas variable de giravion, et en particulier les rotors principaux ou sustentateurs et arrière ou anticouple pour hélicoptères, du type particulier sur lequel chaque pale est retenue au moyeu du rotor par un bras allongé, sensiblement radial par rapport à l'axe de rotation du rotor, rigide dans le sens longitudinal de façon à transmettre les efforts centrifuges provenant de la pale et souple en torsion et flexion de façon à autoriser les oscillations angulaires de battement et de traînée de la pale ainsi que les variations de son pas, et qui est entouré sans contact, jusqu'à proximité du moyeu, par une manchette tubulaire rigide, sollicitée extérieurement par un levier de commande du pas de la pale, et dont l'extrémité la plus proche de l'axe du rotor est reliée au moyeu par le dispositif de palier combiné, qui entoure l'emplanture du bras souple sur le moyeu.

Sur un rotor de ce type particulier, le dispositif de palier combiné faisant l'objet de l'invention remplit simultanément les fonctions de palier d'incidence, de palier à rappel élastique de la pale correspondante en traînée et en battement, et enfin de palier à amortissement incorporé ou interne des mouvements oscillatoires de la pale en traînée.

Des rotors et moyeux de rotors, à pas variable et principaux ou anticouple, pour hélicoptères, ayant la structure particulière présentée ci-dessus et équipés d'un dispositif de palier combiné tel que présenté également ci-dessus sont déjà connus par les brevets français n° 2 397 325 et 2 397 327 de la Demanderesse.

Le brevet français 2 397 327 décrit un rotor à pas variable, dans lequel le bras souple est un élément allongé de liaison constitué essentiellement par un faisceau de fibres à forte résistance mécanique, enrobées individuellement, par exemple avec une résine, et agglomérées les unes aux autres par un élastomère vulcanisé. Les extrémités extérieure et intérieure, par rapport à l'axe de rotation du rotor, de la manchette rigide tubulaire sont solidaires respectivement du pied de la pale correspondante et d'un anneau rigide sur lequel est articulé extérieurement le levier de commande du pas de la pale. La position de l'axe de battement de chaque pale est déterminée par des éléments de rotule sphérique, de préférence en élastomère lamifié, qui sont insérés respectivement entre des parties rigides du moyeu et l'anneau rigide solidaire de l'extrémité interne de la manchette, et des adaptateurs de fréquence, ou amortisseurs essentiellement des mouvements oscillatoires de la pale en traînée, constitués de préférence par des plaques en élastomère à grande raideur et fort hystérésis, sont associés respectivement aux éléments de rotule sphérique.

Dans un tel rotor, l'action du levier de commande de pas de chaque pale sur l'anneau rigide solidaire de la manchette tubulaire, pour faire varier l'incidence de la pale correspondante, entraîne une sollicitation en cisaillement des éléments de rotule sphérique en élastomère lamifié, qui présentent une certaine capacité de rappel élastique s'opposant à cette commande, ainsi qu'aux oscillations angulaires de la pale en battement et en traînée, tandis que l'amortissement des mouvements oscillatoires de la pale en traînée est assuré par les plaques des adaptateurs de fréquence, qui sont soit insérées entre les parties rigides du moyeu et les éléments de rotule sphérique, soit conformées de façon à être incorporées dans les éléments de rotule sphérique en élastomère lamifié.

Selon ce brevet français, cette structure de rotor est avantageusement utilisable comme rotor principal d'hélicoptère léger dans lequel les faisceaux de fibres des éléments de liaison d'au moins deux pales font partie d'un faisceau unique de fibres, ayant au moins une partie intermédiaire, incorporée dans le moyeu du rotor qui présente, perpendiculairement au plan de ce rotor, une épaisseur un peu supérieure à celle des éléments de liaison des pales. De plus, les parties rigides du moyeu qui supportent les éléments de rotule sphérique lamifiés (constitués d'un empilage alterné de couches d'élastomère et de coupelles rigides, par exemple métalliques) sont matérialisées par des plaques rigides, de préférence métalliques, qui sont fixées respectivement aux faces supérieure et inférieure du moyeu, et qui s'étendent en porte-à-faux de part et d'autre de chaque élément ou bras de liaison, au moins jusqu'au niveau de l'emplacement choisi pour l'axe de battement de la pale correspondante.

Dans le brevet français 2 397 325, le bras flexible et torsible, qui relie chaque pale du rotor au moyeu, en particulier destiné au rotor principal d'un hélicoptère, est en fait une lame, et les extrémités extérieures, par rapport à l'axe de rotation du rotor, de la lame et de la manchette qui l'entoure sont réunies au bout de la partie courante ou au pied de la pale correspondante, tandis que l'extrémité intérieure de la manchette tubulaire est, comme dans le brevet précédemment cité, solidaire d'un anneau rigide sur lequel est articulé extérieurement le levier de commande du pas de la pale. La position de l'axe de battement de chaque pale est déterminée, dans la lame flexible correspondante, par des éléments de rotule sphérique, de préférence en élastomère lamifié, qui sont insérés respectivement entre les deux grandes faces planes de la lame flexible et l'anneau rigide, de sorte que le centre de la rotule sphérique se trouve sensiblement sur l'axe longitudinal de la lame flexible. De plus, comme dans le premier brevet français précité, des adaptateurs de fréquence de traînée, ou amortisseurs des mouvements oscillatoires des pales en traînée, constitués de préférence par des plaques en élastomère à grande raideur et fort hystérésis, sont associés respectivement aux éléments de rotule sphérique, ces plaques étant soit insérées respectivement entre les deux grandes faces planes de la lame flexible et les éléments de rotule sphérique correspondants, soit conformées de façon à être incorporées dans les éléments de rotule sphérique en élastomère lamifié. Dans le premier cas, les éléments de rotule sphérique sont disposés entre deux supports annulaires, sensiblement concentriques, dont l'un, en position radiale externe par rapport à l'axe de la lame flexible, est solidaire de l'anneau rigide lié à l'extrémité intérieure de la manchette, tandis que l'autre, en position radiale interne, est reliée par les plaques, visco-élastiques des adaptateurs de fréquence à des plaques rigides de support qui sont fixées non pas sur le moyeu mais sur les faces planes de l'extrémité interne, par rapport à l'axe de rotation du rotor, de la lame souple correspondante assurant la liaison de la pale correspondante au moyeu.

Afin de faciliter cette liaison, chaque lame flexible peut être prolongée, au-delà de l'anneau rigide solidaire de la manchette tubulaire correspondante, en direction de l'arbre du rotor, par un élément terminal plus épais, par lequel la lame est réunie au moyeu du rotor, de préférence au moyen de deux broches traversant deux perçages coïncidants de l'élément terminal de la lame et d'extensions radiales du moyeu.

Dans le cas d'un rotor comportant un certain nombre de paires de pales opposées l'une à l'autre, il est intéressant qu'un même nombre de lames flexibles et torsibles soient disposées de façon que leurs parties médianes, superposées, soient immobilisées dans un boîtier porté par l'extrémité supérieure de l'arbre du rotor, de façon à en constituer le moyeu, les deux parties libres de chaque lame, extérieures au boîtier, constituant respectivement les lames radiales dont les extrémités extérieures sont réunies respectivement aux pieds des pales d'une même paire.

Lorsque chacune des pales du rotor est constituée par un longeron en forme de lame, entouré par une coque profilée, il est alors avantageux que les extrémités extérieures, par rapport à l'axe de rotation du rotor respectivement de chaque lame et de la manchette tubulaire qui l'entoure, soient réunies respectivement aux extrémités intérieures du longeron et de la coque profilée de la pale correspondante.

Il est possible que, d'une part, chaque manchette tubulaire et la coque profilée de la pale correspondante soient d'une seule pièce, et, d'autre part, que chaque lame et le longeron de la pale correspondante soient également d'une seule pièce. Mais il est également possible que l'extrémité extérieure de chaque lame soit réunie au pied de la pale correspondante par l'intermédiaire d'au moins un pivot, d'axe sensiblement perpendiculaire au plan du rotor.

On connaît par ailleurs, par la demande de brevet français n° 85 19 418 de la Demanderesse, un amortisseur de rotation comportant un stator et un rotor coaxiaux, deux faces extrêmes transversales à l'axe commun du stator et du rotor et disposées respectivement de part et d'autre de ces derniers, une chambre principale remplie d'un fluide hydraulique et définie entre les faces extrêmes et les stator et rotor, au moins une palette, mais de préférence plusieurs palettes agencées sur les stator et rotor et divisant la chambre principale en plusieurs volumes, des moyens de laminage du fluide hydraulique à travers les différents volumes de la chambre principale, et au moins une chambre auxiliaire en communication avec la chambre principale, chaque chambre auxiliaire étant au moins partiellement délimitée par une membrane élastiquement déformable permettant de compenser les variations de volume du fluide en fonction de sa température.

Dans le cas où l'amortisseur de rotation ne comporte qu'une seule chambre auxiliaire, celle-ci est avantageusement délimitée entre une des faces extrêmes d'amortisseur et une membrane déformable élastiquement et associée à cette face extrême, qui est percée d'au moins un passage de communication entre les chambres auxiliaire et principale.

Cependant, une membrane élastiquement déformable peut être associée à chaque face extrême de l'amortisseur, de manière à délimiter ainsi deux chambres auxiliaires disposées respectivement de part et d'autre des stator et rotor.

Dans les deux cas, une face extrême associée à une membrane est constituée d'une première couronne, associée au stator, et d'une seconde couronne, associée au rotor, le passage de communication entre la chambre principale et la chambre auxiliaire étant formé par un jeu ménagé entre ces couronnes. La membrane a avantageusement une forme annulaire et ses périphéries annulaires interne et externe sont entourées respectivement d'une bague intérieure et d'une bague extérieure, auxquelles la membrane est solidarisée par vulcanisation. Une telle membrane, entourée de ses bagues intérieure et extérieure, peut être logée avantageusement dans une gorge annulaire correspondante définie par les deux couronnes de la face extrême correspondante. Dans ce dernier cas, les bagues intérieure et extérieure d'une membrane sont de préférence adhérisées sur les parois en regard de la gorge.

La membrane déformable élastiquement peut être une membrane en élastomère ou réalisée par des couches d'élastomère et des couches métalliques disposées alternativement. Dans ce dernier cas, les couches sont avantageusement disposées parallèlement par rapport à l'axe de rotation du rotor et du stator.

Dans un tel amortisseur de rotation, l'amortissement s'effectue par le laminage du fluide hydraulique, qui est de préférence une huile de silicone à haute viscosité, entre l'extrémité des palettes et la paroi cylindrique en regard, lorsque le rotor est entraîné en rotation par rapport au stator autour de leur axe commun, selon un mode de fonctionnement qui est bien connu et décrit non seulement dans la demande de brevet français précitée, mais également dans le brevet français 2 256 347.

Enfin, il est à noter que la demande de brevet français n° 85 19 418 propose l'application de l'amortisseur de rotation qui en fait l'objet à une suspension pour véhicule ainsi qu'à une commande manuelle comprenant une poignée de commande solidaire d'un arbre et dont le déplacement angulaire est représentatif d'un signal de sortie pilotant un organe, par exemple une commande de vol pour aéronef, destinée à l'orientation par un vérin électrique du diabolo avant du train d'atterrissage tricycle d'un hélicoptère.

Par la présente invention, on se propose de perfectionner les rotors et moyeux de rotor à pas variable, en particulier pour hélicoptère, du type décrit dans les brevets français n°2 397 325 et 2 2397 327 de la Demanderesse, en améliorant la structure des dispositifs de palier combiné dont ils sont équipés afin de diminuer la puissance nécessaire à la commande de l'incidence des pales.

Un autre objet de l'invention est de perfectionner les dispositifs de palier combiné des rotors et moyeux de rotor du type précité connu, de sorte qu'ils assurent un amortissement des mouvements angulaires des pales en traînée qui soit suffisant, dans tous les différents cas d'application envisagés sur hélicoptères de faible ou de moyen tonnage.

Un autre objet encore de l'invention est de proposer un dispositif de palier combiné perfectionné, comportant un amortisseur de type nouveau, destiné à l'amortissement des mouvements oscillatoires des pales en traînée et qui, par rapport à un amortisseur visco-élastique classique, tel que connu par les brevets français 2 397 325 et 2 397 327, présente l'avantage principal de permettre la dissociation, dans un même organe, des fonctions de raideur (et donc de rappel élastique, qui est d'autant plus élevé que la raideur est grande) et d'amortissement, ce qui facilite l'optimisation de chacune de ces fonctions.

A cet effet, le dispositif de palier combiné selon l'invention, pour équiper des rotors à pas variable du type connu notamment par le brevet français 2 397 327, comprend, comme cela est également connu par le dernier brevet français précité, une articulation à rotule sphérique, centrée sur l'axe du bras souple correspondant du rotor, et comportant au moins un élément d'un matériau visco-élastique à grande rémanence de déformation, sensiblement en forme de portion de calotte sphérique, qui est retenu par un premier support rigide annulaire destiné à être solidarisé à la manchette rigide tubulaire correspondante du rotor, de sorte que l'articulation à rotule sphérique permette, autour de son centre, une liberté relative de mouvement de la pale correspondante du rotor en battement et en traînée, par cisaillement du matériau visco-élastique qui assure également un rappel élastique de la pale en battement et en trainée, ainsi qu'un amortissement des mouvements angulaires de la pale en trainée et en battement, et il se caractérise en ce qu'il comprend également un palier lisse cylindrique d'articulation d'incidence et d'encastrement sur le moyeu, qui est lié à un second support rigide de l'articulation à rotule sphérique, le palier lisse cylindrique étant monté concentriquement à l'articulation à rotule sphérique et radialement en série avec cette dernière par rapport à l'axe du bras souple.

On obtient ainsi que le changement de l'incidence des pales est permis par torsion du bras souple de liaison sans avoir à solliciter en cisaillement le ou les éléments visco-élastiques de l'articulation à rotule sphérique, du fait que cette dernière peut tourner autour de l'axe du bras souple grâce à la présence du palier lisse cylindrique, ce qui permet de diminuer très sensiblement la puissance qui doit être transmise par les organes de commande du changement du pas des pales. Il en résulte également que le ou les éléments en matériau visco-élastique peut ou peuvent être dimensionnés pour assurer un rappel élastique convenable de la pale en battement et en traînée, car les valeurs des raideurs en battement et en traînée ainsi que le rapport de ces raideurs sont ajustées en choisissant l'épaisseur, la répartition et la dureté du matériau visco-élastique, de préférence un élastomère, très performant sous l'aspect des caractéristiques mécaniques.

Il en est de même de l'amortissement des oscillations angulaires de la pale en traînée, qui peut être assuré dans une mesure suffisante sur des rotors arrière d'hélicoptères de faible tonnage, par le ou les éléments en matériau visco-élastique de l'articulation à rotule sphérique, du fait de l'effort de rémanence du matériau utilisé, à savoir un élastomère à haut hystérésis.

Dans le dispositif de palier combiné selon l'invention, l'articulation à rotule sphérique peut être montée avantageusement libre en translation sur un jeu axial limité parallèlement à l'axe du palier lisse cylindrique, pour permettre des déplacements axiaux du ou des éléments d'oscillations et d'amortissement, ce qui est favorable à la prise en charge de la force centrifuge et permet de compenser les tolérances de montage.

Dans le cas où, comme dans le brevet français 2 397 325, le dispositif de palier combiné est destiné à être solidarisé à la manchette correspondante par celui des deux supports rigides annulaires qui est en position radiale externe sur l'articulation à rotule sphérique, le dispositif selon l'invention se caractérise de plus en ce que l'autre support rigide, en position radiale interne, de l'articulation à rotule sphérique est lié au palier lisse cylindrique, qui est un palier sec entouré par l'articulation à rotule sphérique et comprenant un manchon cylindrique destiné à être solidarisé au moyeu et autour duquel le support rigide interne tourillonne par au moins deux bagues autolubrifiantes espacées l'une de l'autre selon l'axe du manchon et logées chacune dans une gorge de maintien annulaire ménagée dans la face radiale interne du support rigide interne. L'articulation d'incidence constituée par ce palier sec a pour avantage de permettre simultanément un bon encastrement sur le moyeu et d'assurer la liberté nécessaire en translation axiale pour permettre les déplacements du ou des éléments d'oscillations et d'amortissement.

Afin de faciliter le montage et le rattrapage de jeu au niveau du palier lisse cylindrique, chaque bague autolubrifiante comprend avantageusement deux demi-bagues ayant chacune une forme hémicylindrique et qui sont logées dans une même gorge annulaire de maintien.

Avantageusement, le dispositif de palier combiné selon l'invention comprend également un dispositif de rattrapage automatique du jeu du palier lisse cylindrique, et, dans une forme préférée de réalisation, ce dispositif de rattrapage automatique de jeu est un dispositif hydraulique comprenant au moins une chambre de compensation, remplie d'un fluide hydraulique pressurisé par au moins un mécanisme de pressurisation, et en communication avec chacune des gorges annulaires de maintien, entre la bague correspondante et le fond de la gorge, par au moins une canalisation, de sorte que le rattrapage de jeu est assuré par déplacement diamétral des bagues sous l'action de la pression du fluide hydraulique dans chaque chambre de compensation.

Afin d'assurer l'étanchéité du dispositif hydraulique de rattrapage automatique de jeu, chaque bague est avantageusement reliée de manière étanche à chacune des deux faces latérales de la gorge annulaire dans laquelle elle est logée par un joint annulaire souple, de préférence élastiquement déformable. Dans une forme de réalisation avantageusement simple, chaque bague est engagée dans un joint d'étanchéité souple et annulaire de section transversale en forme de U logé dans la gorge de maintien correspondante, aux faces latérales de laquelle les ailes du joint en U sont solidarisées, tandis que la base du joint en U, entre la bague et le fond de la gorge, n'est pas solidarisée à ce fond de gorge dans lequel débouche au moins une canalisation de communication avec au moins une chambre hydraulique de compensation.

De même, afin d'assurer l'étanchéité en direction circonférentielle, entre les deux demi-bagues logées dans chaque gorge de maintien, chaque demi-bague est reliée par ses deux extrémités aux deux extrémités de l'autre demi-bague par deux raccords souples, de préférence élastiquement déformables, et, dans ce cas, chacun des deux raccords souples est solidaire du joint en U, dont il raccorde les deux ailes l'une à l'autre.

Une telle réalisation de joints et raccords souples, avantageusement sous la forme d'éléments en un matériau visco-élastique, tel qu'un élastomère, et de préférence le même que celui du ou des éléments visco-élastiques de l'articulation à rotule sphérique, permet non seulement d'assurer l'étanchéité, mais également de cloisonner le jeu annulaire des bagues de frottement du palier lisse cylindrique en permettant leur degré de liberté diamétrale.

Dans le dispositif automatique de rattrapage de jeu, le mécanisme de pressurisation du fluide hydraulique de chaque chambre de compensation comprend, dans une réalisation particulièrement simple, au moins une membrane souple, de préférence élastiquement déformable, qui est avantageusement une vessie étanche, logée dans la chambre de compensation correspondante, et gonflable par une valve d'alimentation en gaz qui est accessible de l'extérieur du palier.

Dans une forme de réalisation avantageuse sur le plan de la compacité et du poids, le dispositif hydraulique de rattrapage de jeu est au moins partiellement intégré dans l'articulation à rotule sphérique, au moins une chambre hydraulique de compensation étant délimitée au moins partiellement entre les supports rigides interne et externe et/ou dans un évidement de l'un au moins des supports rigides de la rotule sphérique, et l'étanchéité de la chambre de compensation est assurée par au moins un élément en matériau visco-élastique de la rotule sphérique.

Dans une forme de réalisation d'une grande simplicité, qui peut éventuellement être dépourvue de dispositif hydraulique de rattrapage automatique du jeu du palier lisse cylindrique, la rotule sphérique comprend avantageusement un unique élément en matériau visco-élastique, qui est une bande d'élastomère à haut hystérésis, en forme de calotte sphérique adhérisée par ses faces radiales interne et externe, respectivement concave et convexe, aux faces radiales respectivement externe convexe et interne concave des supports rigides respectivement interne et externe, et le manchon de palier lisse cylindrique présente une bride radiale interne destinée à être boulonnée sur une bride radiale externe d'un fourreau de fixation de l'emplanture du bras souple correspondant sur le moyeu.

Cependant, dans une variante préférée, particulièrement avantageuse lorsque l'amortissement des mouvements oscillatoires de la pale en traînée peut ne pas être suffisamment assuré par le ou les éléments visco-élastiques de la butée sphérique, le dispositif de palier combiné selon l'invention comprend de plus un amortisseur hydraulique des mouvements angulaires de la pale en traînée, qui est associé à la rotule sphérique.

Il est alors avantageux que l'amortisseur hydraulique soit un amortisseur de rotation, monté en série radiale avec le palier lisse cylindrique, par rapport à l'axe de ce dernier, cet amortisseur hydraulique de rotation étant du type comportant un stator et un rotor coaxiaux, délimitant entre eux au moins une chambre interne d'amortisseur remplie d'un fluide hydraulique, tel qu'une huile de silicone de haute viscosité, et au moins une palette solidaire du rotor ou du stator et subdivisant la chambre interne en deux chambres d'amortissement reliées l'une à l'autre par des moyens de laminage, de sorte que tout mouvement de rotation relatif du rotor et du stator autour de leur axe commun entraîne une rotation de la palette dans la chambre interne, en comprimant l'une des deux chambres d'amortissement et en provoquant une détente dans l'autre, et assure ainsi un amortissement du mouvement de rotation par laminage au travers des moyens de laminage du fluide circulant de la chambre d'amortissement comprimée vers la chambre d'amortissement détendue, le stator étant solidaire du support rigide de la rotule sphérique qui est lié au palier lisse cylindrique, et le rotor étant solidaire du support rigide de la rotule sphérique qui est destiné à être solidarisé, à la manchette tubulaire correspondante. Dans un tel dispositif de palier, les moyens de laminage peuvent être avantageusement associés à la palette et, en particulier, ces moyens de laminage peuvent simplement être formés par un étroit passage délimité entre l'extrémité libre de la palette portée par le rotor ou le stator et une surface en regard sur le stator ou le rotor.

De plus, l'étanchéité de chaque chambre interne de l'amortisseur peut avantageusement être assurée par au moins un organe en matériau visco-élastique reliant le rotor au stator en assurant, avec un amortissement interne, un rappel élastique vers la position initiale du rotor par rapport au stator.

De préférence, chaque chambre interne de l'amortisseur hydraulique de rotation est reliée par un passage de communication à au moins une chambre de compensation des dilatations du fluide hydraulique, qui est pressurisé par un mécanisme de pressurisation assurant la mise en pression statique de l'amortisseur.

Dans une forme avantageusement simple de réalisation, le mécanisme de pressurisation comprend au moins une membrane souple, de préférence élastiquement déformable, qui délimite au moins partiellement la chambre de compensation des dilatations correspondante. De préférence, cette membrane souple du mécanisme de pressurisation est une vessie étanche, logée dans la chambre de compensation des dilatations correspondante et gonflable par une valve d'alimentation en gaz accessible de l'extérieur du palier.

Avantageusement, le ou les passages de communication entre une chambre de compensation des dilatations et une chambre interne de l'amortisseur est ou sont calibrés de façon à constituer un filtre dynamique pour les fréquences de fonctionnement de l'amortisseur.

Dans le mode de réalisation du dispositif de palier combiné comprenant un amortisseur hydraulique de rotation à chambre de compensation des dilatations, il est avantageux que chaque chambre de compensation des dilatations et son mécanisme de pressurisation, de préférence à vessie gonflable, constituent simultanément et respectivement une chambre de compensation du dispositif hydraulique de rattrapage automatique de jeu du palier lisse cylindrique et son mécanisme de pressurisation, de préférence à vessie gonflable.

Dans ce dernier cas, il est également avantageux que la ou les canalisations reliant une chambre de compensation à une gorge de maintien d'une bague du palier lisse cylindrique est ou sont calibrées de façon à constituer également un filtre dynamique pour les fréquences de fonctionnement de l'amortisseur.

Afin d'améliorer la compacité du dispositif, il est avantageux que l'étanchéité de chaque chambre compensation des dilatations du fluide de l'amortisseur hydraulique soit assurée, au moins partiellement, par au moins un élément en matériau visco-élastique de la rotule sphérique. Il en est particulièrement ainsi lorsque la chambre de compensation appartient simultanément à l'amortisseur rotatif et au dispositif automatique de rattrapage de jeu, lorsque ce dernier est au moins partiellement intégré dans la rotule sphérique.

D'une manière générale, il est également très avantageux que l'amortisseur hydraulique soit au moins partiellement intégré dans l'articulation à rotule sphérique, au moins une chambre interne de l'amortisseur étant alors délimitée au moins partiellement entre les supports rigides interne et externe et/ou dans un évidement de l'un au moins des supports rigides de la rotule sphérique.

Dans ce dernier cas, et selon un mode de réalisation particulièrement avantageux, sur le plan de la simplicité, du poids et du faible nombre des composants, le stator, le rotor et au moins un organe en matériau visco-élastique qui les relie l'un à l'autre au sein de l'amortisseur hydraulique de rotation, sont constitués respectivement par le support rigide interne, le support rigide externe et au moins un élément en matériau visco-élastique de la rotule sphérique. On obtient ainsi un palier intégré d'incidence, à rotule sphérique de rappel élastique en battement et en traînée, et à amortisseur hydro-élastique en traînée.

Dans un exemple préféré de réalisation, l'amortisseur hydraulique de rotation comprend deux palettes de laminage radiales et symétriques l'une de l'autre par rapport à l'axe du palier lisse cylindrique et au plan de battement de la pale correspondante, les deux palettes étant solidaires du support interne de la rotule sphérique et s'étendant chacune, perpendiculairement au plan de traînée et symétriquement au-dessus et au-dessous de ce plan, dans l'une de deux chambres délimitées chacune par un évidement s'étendant radialement et en direction circonférentielle dans le support rigide externe, par une partie de la surface radiale externe du support rigide interne qui est en regard de l'évidement correspondant du support externe et autour du pied de la palette engagée dans cet évidement, et par des portions de surface annulaire du ou des éléments en matériau visco-élastique reliant les deux supports rigides l'un à l'autre.

De même, ce dispositif comprend deux chambres hydrauliques de compensation, symétriques l'une de l'autre par rapport à l'axe du palier lisse cylindrique et par rapport au plan de traînée de la pale correspondante, chaque chambre de compensation étant délimitée par l'un de deux évidements s'étendant radialement en direction circonférentielle dans le support rigide externe, en positions alternées avec les évidements des chambres d'amortisseur en direction circonférentielle, chaque chambre de compensation étant également délimitée par une partie de la surface radiale externe du support rigide interne en regard de l'évidement correspondant et par des portions de surface annulaire du ou des éléments en matériau visco-élastique reliant les deux supports rigides l'un à l'autre, au moins une chambre de compensation étant de plus reliée à chaque gorge de maintien d'une bague de palier lisse cylindrique par une canalisation, de préférence calibrée, qui travers le support rigide interne.

De plus, les évidements des chambres logeant les palettes et/ou de compensation sont avantageusement fermés radialement vers l'extérieur par une chemise externe montée avec étanchéité et amovible sur le pourtour du support rigide externe.

Dans ce cas, il est avantageux que le ou les passages, de préférence calibrés, de communication entre une chambre interne d'amortisseur et une chambre de compensation est ou sont délimités par un jeu radial entre la chemise externe et le support rigide externe.

Avantageusement de plus, chaque chambre interne d'amortisseur est séparée de chacune des chambres de compensation entre lesquelles elle est située en direction circonférentielle par un plot massif d'élastomère, solidaire du ou des éléments visco-élastiques reliant les deux supports rigides l'un à l'autre. Le ou les éléments visco-élastiques de la rotule sphérique comprennent avantageusement deux bandes annulaires en forme de calotte sphérique adhérisées latéralement aux deux supports rigides et entre eux, et chacune de largeur maximale aux niveaux des évidements logeant les palettes. De plus, ces bandes annulaires visco-élastiques sont de préférence de largeur minimale aux niveaux des évidements des chambres de compensation.

Pour faciliter le montage, chaque palette de laminage est avantageusement fixée de manière amovible sur la portion de surface radiale externe du support interne qui forme le fond de l'évidement correspondant, et cette fixation amovible est, dans une réalisation simple, assurée pour chaque palette sur le support interne par au moins une vis engagée radialement par l'intérieur dans un évidement ménagé dans la face radiale interne du support interne, entre deux portées cylindriques dans chacune desquelles est ménagée l'une des gorges de maintien d'une bague du palier lisse cylindrique.

De plus, le support rigide externe est avantageusement percé d'au moins deux passages axiaux débouchant chacun dans une chambre interne d'amortisseur et dans l'un desquels est montée une valve de remplissage en fluide hydraulique, qui est accessible de l'extérieur, de préférence du côté de la liaison à la manchette tubulaire rigide, tandis qu'une valve de purge est montée dans un autre des passages axiaux et est accessible de l'extérieur, de préférence du côté destiné à être tourné vers le moyeu, le support rigide externe étant de plus percé de deux autres passages sensiblement axiaux débouchant chacun dans une chambre de compensation, et dans chacun desquels est montée une valve de gonflage, accessible de l'extérieur, de préférence du côté de la liaison à la manchette.

L'invention a également pour objet un rotor à pas variable pour giravion, utilisable comme rotor principal ou comme rotor arrière d'hélicoptère, et comprenant un moyeu de rotor, entraîné en rotation autour d'un axe de rotation du rotor par un mât rotor, des pales, dont chacune est retenue au moyeu par l'intermédiaire d'un bras allongé, sensiblement radial par rapport à l'axe du rotor, rigide dans le sens longitudinal à l'encontre de la force centrifuge et souple en flexion et torsion pour autoriser les mouvements de battement et de traînée et les variations du pas de la pale correspondante, et est entouré sans contact, jusqu'à proximité du moyeu, par une manchette tubulaire rigide en torsion et flexion sollicitée extérieurement par un levier de commande du pas de la pale correspondante, et dont l'extrémité la plus proche de l'axe du rotor est reliée au moyeu par un dispositif de palier combiné d'incidence, à rappel élastique de la pale correspondante en battement et en traînée, et à amortissement incorporé des mouvements angulaires de la pale en traînée, qui entoure l'emplanture du bras souple correspondant sur le moyeu, et qui comprend une articulation à rotule sphérique centrée sur l'axe du bras souple et comportant au moins un élément d'un matériau visco-élastique à grande rémanence de déformation, sensiblement en forme de portion de calotte sphérique, qui est retenu entre deux supports rigides, dont l'un, de forme annulaire, est solidarisé à la manchette, et dont l'autre est relié au moyeu, de sorte que l'articulation à rotule sphérique permet, autour de son centre, une liberté relative de mouvement de la pale en battement et en traînée, par cisaillement du matériau visco-élastique, qui assure un rappel élastique de la pale en battement et en traînée, ainsi qu'un amortissement des mouvements angulaires de la pale en traînée, et le rotor selon l'invention se caractérise en ce que le dispositif de palier combiné est, pour chaque pale, un dispositif tel que présenté ci-dessus, et propre à l'invention.

Il est possible que l'extrémité interne de la manchette soit solidarisée au dispositif de palier combiné par vissage d'une bride sensiblement radiale externe portée par la manchette contre le support rigide externe du dispositif de palier. Dans ce cas, la bride sensiblement radiale externe est avantageusement rabattue autour du support externe du dispositif de palier et d'une seule pièce avec une douille emmanchée et retenue dans l'extrémité interne tubulaire de la manchette, de préférence en matériau composite, et dans le prolongement de la coque profilée de la pale correspondante. De manière analogue, il est possible que l'extrémité externe de la manchette soit reliée à l'extrémité interne de la coque profilée de la pale par vissage contre la manchette d'une bride radiale externe d'une douille emmanchée et retenue dans l'extrémité interne tubulaire de la coque profilée de la pale.

Dans une réalisation avantageusement simple, de faible traînée aérodynamique, et comportant un nombre limité de pièces, le moyeu comprend un corps central tubulaire, coaxial à l'arbre rotor, et des extensions radiales, par rapport à l'axe du rotor, et en nombre égal au nombre des pales, pour la liaison de ces dernières au moyeu. Dans une première variante, le moyeu peut être solidarisé à l'arbre rotor par boulonnage, contre une bride d'extrémité de l'arbre qui est radiale par rapport à son axe, de la partie des extensions radiales qui est tournée vers l'arbre rotor. Cependant, selon une autre variante, préférée pour la réalisation de rotor arrière, les extensions radiales et le corps tubulaire du moyeu sont d'une seule pièce avec l'extrémité de l'arbre rotor.

Dans ces différents cas, afin de permettre une bonne liaison des bras souples au moyeu, chaque bras souple est avantageusement prolongé vers l'axe du rotor, au-delà du centre du dispositif de palier combiné correspondant, par une partie d'emplanture, éventuellement surépaissie, par laquelle le bras est fixé à une extension radiale du moyeu.

Dans un premier exemple de réalisation, la partie d'emplanture du bras souple est retenue dans un fourreau à bride radiale externe boulonnée sur une bride radiale interne du manchon du palier lisse cylindrique, le fourreau étant lui-même retenu dans une extension radiale du moyeu par au moins une broche d'axe sensiblement parallèle à l'axe du rotor et traversant des perçages coïncidants dans la partie d'emplanture, le fourreau et l'extension radiale. Mais, dans un autre exemple, le manchon du palier lisse cylindrique est emmanché sur ou intégré dans une extension radiale tubulaire et cylindrique du moyeu, dans laquelle la partie d'emplanture du bras souple est retenue par une broche diamétrale dont l'axe est sensiblement dans le plan de rotation du rotor.

Dans le cas particulier d'un rotor anticouple, dont le corps de moyeu tubulaire est lié en rotation, par des cannelures internes, à un premier tronçon d'arbre tubulaire, à cannelures externes, qui coulisse axialement dans le corps de moyeu et dont l'extrémité, du côté opposé à l'arbre rotor, dépasse du corps de moyeu et est solidaire d'un plateau de commande à bras radiaux en nombre égal au nombre des pales et sur chacun desquels s'articule une extrémité d'un levier de commande de pas, dont l'autre extrémité sollicite la manchette, le plateau de commande étant lié par une butée à billes à un arbre de commande non rotatif, coaxial à l'arbre rotor et au premier tronçon d'arbre tubulaire, et monté coulissant axialement dans ce dernier, ce rotor anti-couple est avantageusement tel que le moyeu comprend un second tronçon d'arbre tubulaire, engagé coaxialement dans le corps de moyeu, auquel il est solidarisé par vissage d'une bride radiale externe de ce second tronçon contre une extrémité du corps de moyeu, les cannelures internes étant présentées à l'intérieur du second tronçon d'arbre tubulaire qui est traversé par le premier tronçon d'arbre tubulaire.

Toujours dans le cas d'un rotor anti-couple, il est avantageux que l'extrémité interne du longeron de la pale soit en forme de fourche entre les deux branches de laquelle est engagée l'extrémité externe, de préférence entourée d'une douille de protection, du bras souple relié au longeron de la pale par une broche amovible d'axe perpendiculaire à l'axe longitudinal commun au longeron et au bras souple et s'étendant dans le plan de rotation du rotor.

Par contre, dans le cas particulier d'un rotor principal d'hélicoptère, dont le mât rotor porte une butée basse de battement des pales aux vitesses faibles ou nulle du rotor, du type à anneau réciproque, coopérant avec une butée basse solidaire de chaque pale, ce rotor est avantageusement tel que la butée basse de chaque pale est constituée par un talon inférieur du support externe du dispositif de palier combiné, ou, avantageusement, de la chemise externe de ce support externe.

Dans le cas également d'un rotor principal, il est d'autre part avantageux que l'extrémité externe, de préférence surépaissie, du bras souple, et l'extrémité externe, sensiblement cylindrique, de la manchette tubulaire essentiellement tronconique, sont liées par au moins une broche perpendiculaire au plan de rotation du rotor à une chape radiale interne d'une pièce de liaison conformée en double chape radiale extérieure et liée au pied de la pale correspondante par deux broches perpendiculaires au plan de rotation du rotor et dont l'une est amovible pour autoriser, autour de l'autre formant pivot, la rotation de la pale par rapport au bras souple et à la manchette correspondante.

Enfin, dans ces différents cas, le levier de commande de pas peut être avantageusement articulé dans une chape fixée à un talon latéral du support rigide externe du dispositif de palier combiné ou de sa chemise externe.

L'invention sera mieux comprise, et d'autres avantages et caractéristiques de l'invention ressortiront à la lecture de la description qui suit, de plusieurs exemples, donnés à titre non limitatif, en référence aux dessins annexés sur lesquels :

la figure 1 représente une vue schématique en plan de la partie centrale d'un rotor anti-couple quadripale d'hélicoptère,

la figure 2 est une vue schématique en coupe axiale du rotor de la figure 1, dont une première variante simplifiée, pour hélicoptère de faible tonnage, est représentée sur la demi-coupe inférieure (au-dessous de l'axe médian horizontal de la figure), tandis qu'une seconde variante, préférée pour un hélicoptère de moyen tonnage, est représentée sur la demi-coupe supérieure (au-dessus de l'axe médian horizontal),

la figure 3 est une vue en élévation latérale du côté tourné vers la pale du rotor, du dispositif de palier combiné du rotor selon la moitié supérieure de la figure 2,

la figure 4 est une vue en coupe selon IV-IV des figures 3 et 5,

la figure 5 est une vue en coupe selon V-V de la figure 4,

la figure 6 est une demi-vue en coupe selon VI-VI de la figure 3,

la figure 7 est une demi-vue en coupe selon VII-VII de la figure 5,

la figure 8 est une vue schématiquement en coupe transversale selon VIII-VIII de la figure 9 relative au dispositif hydraulique de rattrapage automatique de jeu équipant le dispositif des figures 3 à 7,

la figure 9 est une vue schématique en coupe selon IX-IX de la figure 8,

la figure 10 est une vue schématique et partielle représentant un détail de la figure 9,

les figures 11a et 11b sont des vues représentant en partie en plan et en partie en coupe dans le plan de rotation du rotor respectivement de la partie central et d'une partie directement adjacente d'un rotor anti-couple tripale d'hélicoptère,

les figures 12a et 12b représentent en coupe axiale les mêmes parties que les figures 11a et 11b,

la figure 13 est une coupe selon XIII-XIII de la figure 11a,

la figure 14 est une vue en partie en plan et en partie en coupe de la partie centrale d'un rotor principal quadripale d'hélicoptère,

la figure 15 est une vue en partie en élévation latérale et en partie en coupe de la partie centrale du rotor de la figure 14,

la figure 16 est une vue en coupe selon XVI-XVI des figures 14 et 15, et

la figure 17 est une vue en bout selon la flèche F de la figure 14.

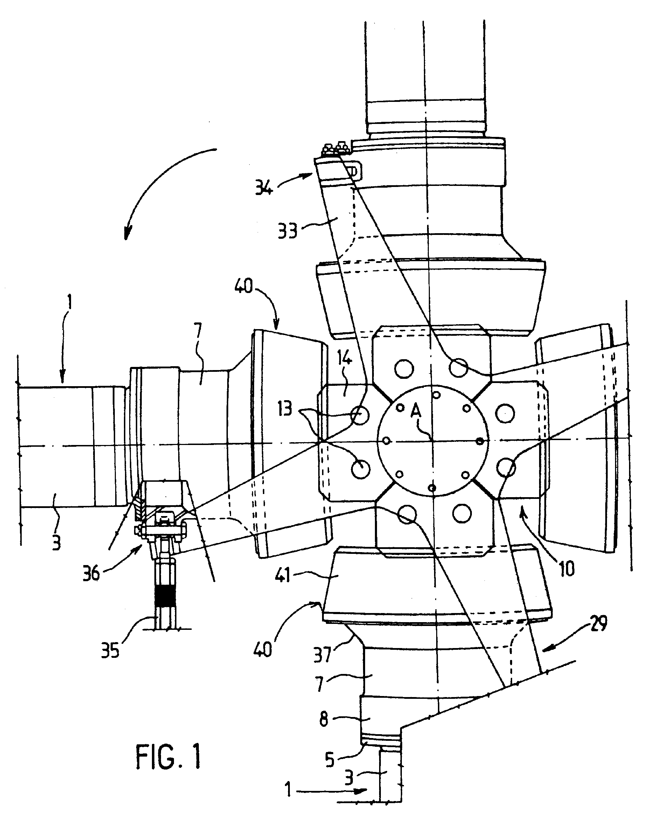

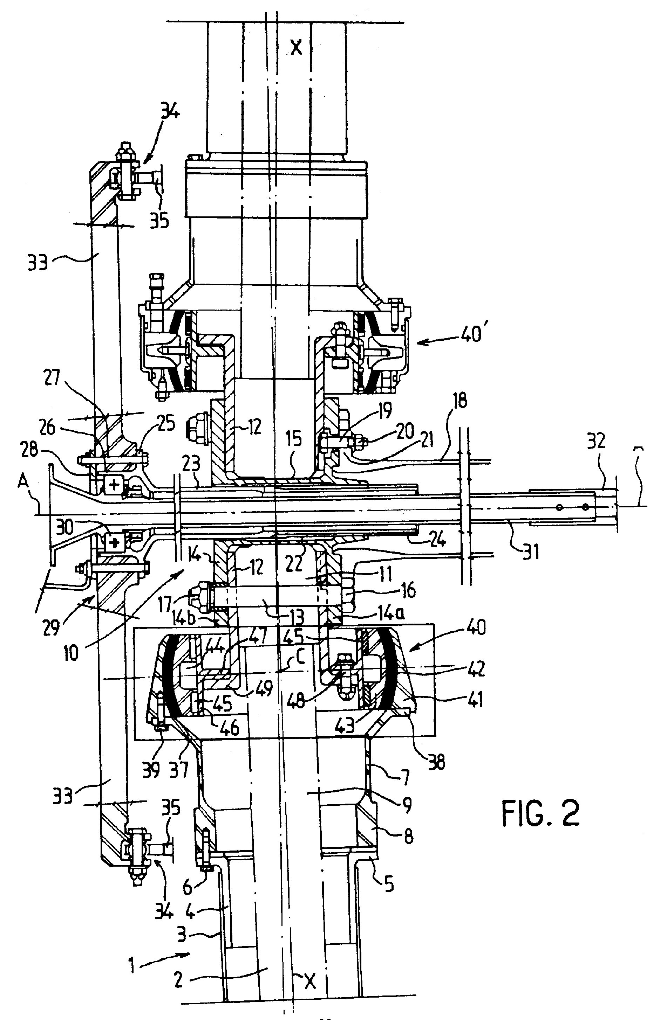

En référence à la figure 1 et à la moitié inférieure de la figure 2, le rotor arrière comprend quatre pales 1, dont chacune est essentiellement constituée d'un tirant 2 entouré d'une coque profilée 3. L'extrémité interne (la plus proche de l'axe A de rotation du rotor) de la coque 3 est tubulaire et solidaire d'une douille 4 qui est emmanchée dans la coque 3 et dont l'extrémité interne est conformée en bride annulaire 5, sensiblement radiale par rapport à l'axe longitudinal X-X du tirant 2. Par cette bride 5, la coque 3 de la pale 1 est fixée par des vis sensiblement axiales, telles que 6, dans l'extrémité externe surépaissie 8 d'une manchette 7 rigide et tubulaire, qui entoure sans contact un bras souple 9, lequel est d'une seule pièce avec le tirant 2 de la pale 1 et le prolonge vers l'axe A du rotor, au-delà du pied de pale formé au niveau de la douille 4, à l'extrémité interne de la coque 3. Le bras souple 9, qui retient, de la manière décrite ci-dessous, la pale 1 sur le moyeu 10 du rotor, à l'encontre des forces centrifuges, est un élément flexible et torsible, essentiellement constitué, par exemple, d'un faisceau longitudinal de fils ou fibres synthétiques ou minéraux (métalliques), éventuellement en tresses, individuellement enrobés d'une résine synthétique et agglomérés les uns aux autres par un élastomère, de sorte que ce bras souple 9 transmette sans déformation importante les efforts centrifuges axiaux en provenance de la pale 1 et autorise, par flexion, les mouvements de battement et de trainée, ainsi que, par torsion, les variations de l'incidence de ladite pale 1.

L'extrémité interne du bras souple 9, conformée en partie d'emplanture 11 surépaissie, est emmanchée et retenue dans un fourreau métallique 12 par deux broches 13, parallèles à l'axe A du rotor, et traversant des perçages coïncidants ménagés non seulement dans l'emplanture 11 et dans le fourreau 12, mais également dans une extension 14 tubulaire et radiale (par rapport à l'axe A) d'une seule pièce avec un corps de moyeu central et tubulaire 15, qui est métallique. Le moyeu 10 comprend un nombre d'extensions tubulaires 14 égal au nombre des pales 1, et dans chacune desquelles les deux broches 13 correspondantes retiennent radialement (par rapport à l'axe A) l'assemblage de l'emplanture 11 et du fourreau 12. Chaque broche 13 est constituée par la tige d'un goujon 16 à tête appliquée contre la partie axiale interne 14a de l'extension tubulaire 14 et à extrémité de tige filetée, en saillie au-delà de la partie axiale externe 14b de cette même extension tubulaire 14, et sur laquelle est vissée un écrou 17 freiné et goupillé.

Le corps de moyeu 15 et ses extensions radiales 14 sont solidaires en rotation d'un mât ou arbre rotor 18, tubulaire et coaxial (autour de l'axe A), par une couronne d'ensembles vis 19 - écrou 20, qui fixe les parties axiales internes 14a contre la bride radiale 21 de l'extrémité surépaissie de l'arbre rotor 18. Le corps central tubulaire 15 du moyeu 10 présente, sur une partie de sa longueur, des cannelures axiales internes 22 par lesquelles ce corps tubulaire 15 est en prise avec des cannelures axiales externes 24 s'étendant sur la partie axiale interne d'un tronçon d'arbre tubulaire 23 monté ainsi coulissant axialement dans le corps de moyeu 15 tout en étant solidaire en rotation de ce dernier.

L'extrémité axiale externe (du côté opposé à l'arbre rotor 18) du tronçon d'arbre tubulaire 23 est évasée et conformée en bride radiale externe 25 et en collet axial 26 permettant, d'une part, la fixation par des ensembles vis-écrou 27 et une couronne externe de contre-appui 28, d'un plateau de commande coaxial 29 sur le tronçon d'arbre 23, et, d'autre part, le blocage axial sur le tronçon d'arbre 23 de la bague externe d'une butée à billes 30, dont la bague interne est axialement bloquée sur l'extrémité axiale externe d'un arbre central coaxial de commande 31, monté coulissant axialement à l'intérieur du tronçon d'arbre tubulaire 23, et dont l'extrémité axiale interne est liée à un mécanisme 32 d'entraînement en translation du dispositif de commande de changement de pas des pales du rotor arrière. Le plateau de commande 29 est un plateau cruciforme à quatre bras radiaux 33, dont l'extrémité radiale externe de chacun est conformée en chape d'articulation par une liaison rotulée 34 d'une extrémité d'une bielle 35 de commande du pas d'une pale 1, l'autre extrémité de la bielle 35 étant également articulée par une liaison rotulée 36 dans une chape en saillie latérale sur l'extrémité externe surépaissie 8 de la manchette 7 correspondante (voir figure 1).

La structure de rotor arrière décrite jusqu'à présent est relativement bien connue et permet de commander simultanément le changement de pas de toutes les pales 1 de la manière suivante : lorsque l'arbre de commande non rotatif 31 est translaté axialement par le mécanisme 32, il entraîne également en translation axiale, par la butée à billes 30, le plateau de commande 29 ainsi que le tronçon d'arbre tubulaire 23, qui sont simultanément entraînés en rotation autour de l'axe A par le corps de moyeu 15 et l'arbre rotor 18. Le déplacement axial du plateau 29 et de ses bras 33 exerce une traction ou une compression sur les bielles de commande 35, qui sollicitent extérieurement les manchettes 7 en rotation autour des axes longitudinaux X-X des pales 1, ce qui provoque, par torsion des bras souples 9, la variation simultanée de l'incidence des pales 1. Simultanément, lorsque le rotor tourne, les pales 1 sont soumises à des mouvements de battement et de traînée et à des mouvements angulaires en traînée, que permettent les bras souples 9.

Dans ce rotor, la commande du changement de pas des pales 1 est facilitée, les pales 1 sont élastiquement rappelées en battement et en traînée, et leurs mouvements angulaires en traînée sont amortis par des dispositifs de paliers combinés 40, qui sont des paliers d'appui des extrémités internes 37 des manchettes rigides 7 sur le moyeu 10, et qui font plus particulièrement l'objet de l'invention.

Jusqu'à ce point de la description, les positions axiales ou radiales internes ou externes ont été repérées en général par rapport à l'axe A du rotor. Pour la description des dispositifs de paliers combinés, les positions axiales ou radiales internes ou externes seront en général indiquées ci-dessous par référence à l'axe longitudinal X-X commun à une pale 1 et à son bras souple 9.

Dans l'exemple de réalisation de la moitié inférieure de la figure 2, chaque dispositif de palier 40 est solidaire, par des vis axiales 39 de la bride radiale externe 38 portée par l'extrémité axiale interne 37 de la manchette 7 correspondante. Ces vis 39 sont retenues dans un support radial externe rigide, ou armature externe 41, de forme générale externe sensiblement tronconique convergeant vers l'axe A, du palier combiné 40. Cette armature externe, annulaire et métallique, 41, présente une face radiale interne concave, en forme de portion de calotte sphérique, par laquelle l'armature externe 41 est adhérisée, par exemple par vulcanisation, à la face radiale externe convexe, de courbure correspondante, d'une bande annulaire 42 d'un matériau visco-élastique à grande rémanence de déformation, par exemple un élastomère à haut hystérésis. Par sa face radiale interne, concave et également en forme de portion de calotte sphérique, la bande d'élastomère 42 est également adhérisée à la face radiale externe, convexe et de courbure correspondante, d'un support rigide radial interne 43, ou armature interne. Cette armature interne annulaire et métallique 43 présente une face radiale interne sur laquelle deux portées cylindriques d'extrémité axiale sont séparées l'une de l'autre par un évidement central 44. Dans chacune des portées cylindriques d'extrémité axiale, une gorge annulaire a été ménagée pour loger une bague autolubrifiante 45. Par ces deux bagues 45, maintenues chacune dans sa gorge, l'ensemble constitué des deux armatures 41 et 43 et de la bande d'élastomère 42, qui est aménagé en rotule sphérique centrée sur l'axe X-X du bras 9 correspondant, est monté tourillonnant autour d'un manchon cylindrique lisse 46 muni d'une bride radiale interne 47 par laquelle ce manchon 46 est solidarisé par des ensembles vis-écrou 48 à une bride radiale externe 49 de l'extrémité axiale externe du fourreau 12 de liaison au moyeu 10.

Le dispositif de palier combiné 40, permettant ainsi l'appui de l'extrémité axiale interne de la manchette 7 sur le moyeu 10, comporte, d'une part, une articulation de pas cylindrique, sous la forme d'un palier d'incidence lisse cylindrique comportant les deux bagues autolubrifiantes 45 montées dans l'armature annulaire interne 43 et tournant sur et autour du manchon cylindrique 46 solidaire du moyeu 10, et, d'autre part, et en série radiale et concentriquement, une articulation sphérique de battement et de traînée, sollicitant en cisaillement la bande 42 de matériau visco-élastique. Cette bande 42 permet ainsi d'assurer, par sa déformation en cisaillement, une relative liberté de mouvement en battement et en traînée de la pale 1 autour du centreC de la rotule sphérique ainsi constituée, en introduisant un rappel élastique, et, pour les mouvements angulaires de traînée, un amortissement par l'effet de la rémanence du matériau utilisé, en l'occurence un élastomère à haut hystérésis. Il est de plus à noter que l'articulation à palier lisse cylindrique d'incidence permet également l'encastrement du dispositif de palier combiné 40 sur le moyeu 10, par l'intermédiaire du manchon 46.

On obtient ainsi un dispositif à palier d'incidence lisse et cylindrique, combiné à une butée sphérique de rappel et d'amortissement visco-élastique.

Dans le cas où l'amortissement des mouvements angulaires en traînée de la pale introduit par la bande visco-élastique 42 de ce palier combiné est jugé insuffisant, on utilise alors l'exemple de réalisation représenté sur la moitié supérieure de la figure 2.

Dans un encombrement identique, avec exactement la même disposition vis-à-vis des autres organes du rotor et les mêmes liaisons, d'une part, à la manchette 7 et d'autre part, au moyeu 10 par l'intermédiaire du fourreau 12, le dispositif de palier combiné 40' de la moitié supérieure de la figure 2 se distingue essentiellement de celui décrit ci-dessus par l'incorporation, dans la rotule sphérique, d'un amortisseur hydraulique de rotation à palettes, de sorte que l'ensemble constitue un palier lisse et cylindrique d'incidence et d'encastrement sur le moyeu combiné à une rotule sphérique de rappel élastique en battement et en traînée et à amortisseur interne hydro-élastique des oscillations angulaires de traînée de la pale correspondante.

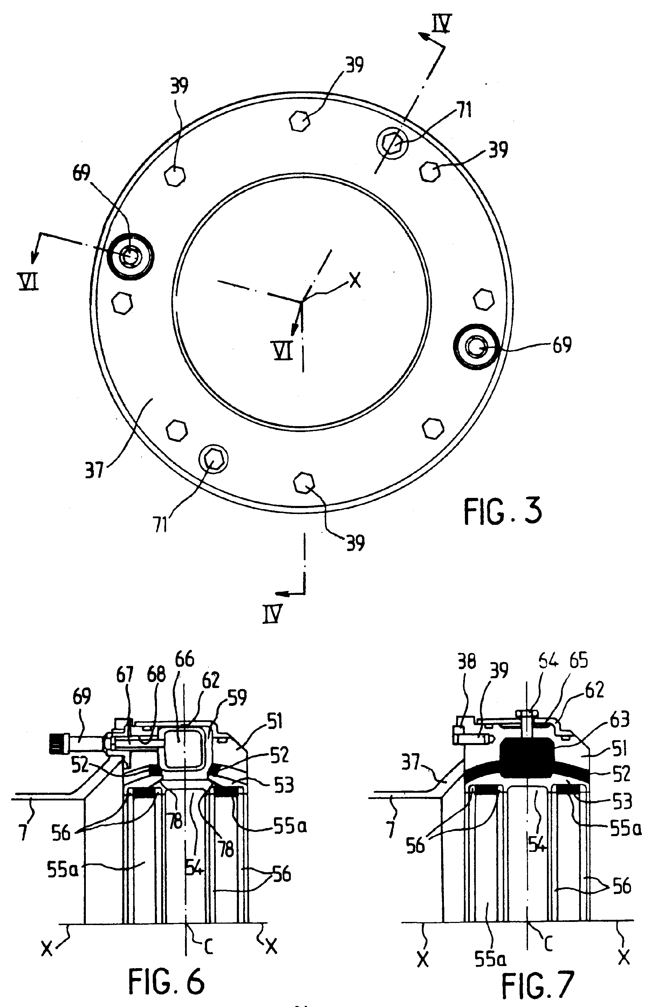

Ce dispositif de palier combiné 40' est décrit ci-dessous en faisant également référence aux figures 3 à 7.

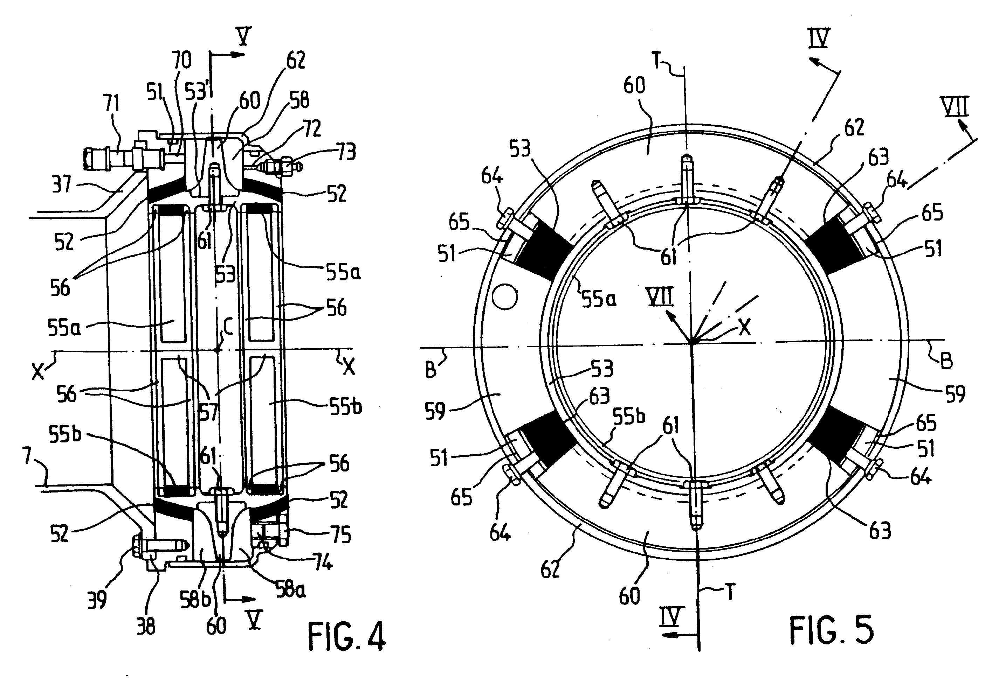

On retrouve une armature interne 53 de la rotule sphérique, dont la face radiale interne présente, de part et d'autre d'un évidement annulaire central 54, une portée cylindrique dans laquelle a été ménagée une gorge annulaire de maintien d'une bague 55 en deux parties 55a et 55b sensiblement hémi-cylindriques, qui sont chacune rattachées aux deux parois latérales de la gorge correspondante par des joints annulaires 56, injectés dans le même élastomère que celui de la rotule sphérique, et reliés l'un à l'autre par des raccords 57 comblant le jeu circonférentiel entre les extrémités en regard des deux demi-bagues 55a et 55b de chaque bague 55. Les deux joints annulaires 56 et les deux raccords 57 reçus dans une même gorge forment un unique élément adhérisé d'une part contre les parois latérales de la gorge correspondante et d'autre part contre les faces latérales et d'extrémité des deux demi-bagues 55a et 55b (voir figures 4, 6 et 7). Les bagues 55 sont en un matériau approprié pour former un palier sec autolubrifiant. On peut, par exemple, utiliser un matériau composite à fibres de carbone dispersées de manière aléatoire dans une résine telle qu'une résine polyimide. Un matériau approprié à cet effet est celui distribué sous le nom commercial de "KINEL" (marque déposée).

Les bagues 55 et l'armature interne 53 forment ainsi l'articulation d'incidence constituée d'un palier sec cylindrique encastré sur le manchon lisse 46 lié au moyeu 10, et libre en translation avec un jeu suffisant pour permettre les déplacements axiaux de la rotule sphérique et de l'amortisseur qu'elle contient, et qui sont nécessaire compte tenu de la force centrifuge sollicitant l'ensemble en fonctionnement, et des tolérances de montage.

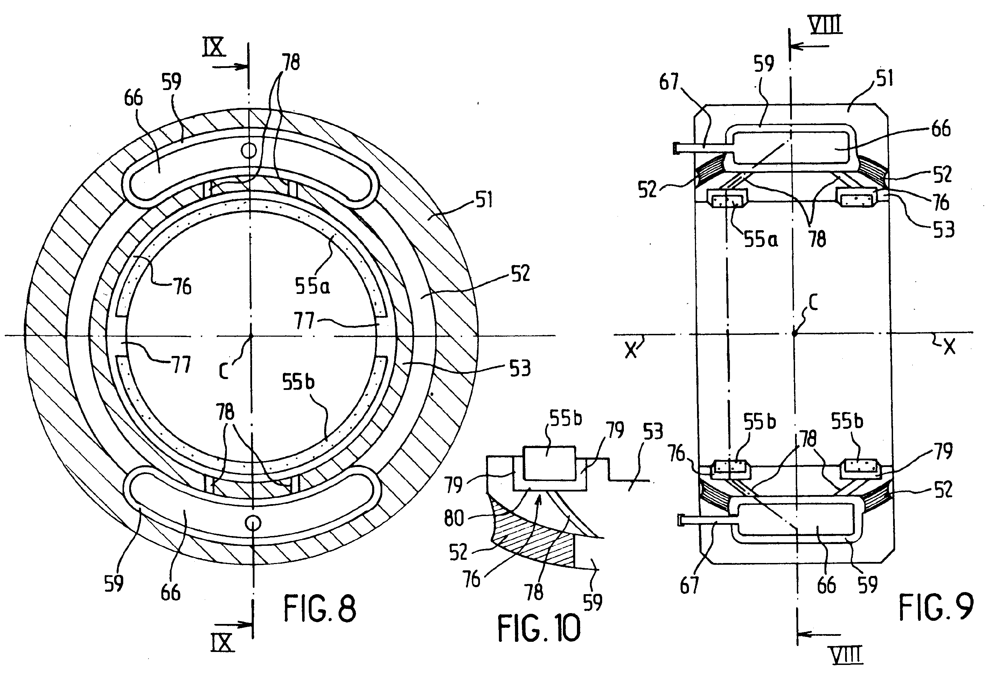

La surface radiale externe de l'armature interne 53 présente deux parties annulaires et convexes d'extrémité axiale, qui sont en forme de portions de calotte sphérique centrées en C sur l'axe XX du palier cylindrique, coaxial au bras souple 9 correspondant, et ces portées sphériques, contre lesquelles sont adhérisées deux bandes latérales annulaires 52 de la rotule sphérique en élastomère, sont séparées par un évidement annulaire 53'. Dans l'armature externe 51 de la rotule sphérique, qui est également solidarisée à la bride radiale 38 de l'extrémité interne 37 de la manchette 7 par des vis 39, quatre évidements s'étendant radialement et en direction circonférentielle, sont ménagés de manière à déboucher dans la face radiale externe de l'armature 51 comme dans sa face radiale interne, en regard de l'évidement périphérique 53' de l'armature interne 53. Latéralement, de part et d'autre de ces quatre logements centrés dans le même plan radial et médian du dispositif, l'armature externe 51 présente, sur sa face radiale interne, deux portées annulaires concaves, en portions de calotte sphérique, qui sont adhérisées aux bandes d'élastomère 52, pour compléter la rotule sphérique de rappel élastique. Les quatre logements sont agencés en deux paires de deux logements identiques et sensiblement diamétralement opposés pour chaque paire, mais différents d'une paire à l'autre, les deux logements d'une paire étant intercalés avec les deux logements de l'autre en direction circonférentielle. Les quatre logements ont la même largeur (parallèlement à l'axe XX) mais deux d'entre eux 58, symétriques l'un de l'autre par rapport au centre C de la rotule sphérique et par rapport au plan de battement BB, s'étendent chacun sur un secteur angulaire sous-tendu par un angle au centre plus grand que celui du secteur angulaire sur lequel s'étend chacun des deux autres logements 59, symétriques l'un de l'autre par rapport au centre C et par rapport au plan de traînée TT de la pale correspondante. Dans chacun des deux logements les plus grands 58 est logée une palette cintrée 60, métallique, introduite dans l'armature externe 51 radialement de l'extérieur vers l'intérieur, de sorte que son pied soit engagé dans l'évidement 53' formant le fond du logement correspondant, et que la palette 60 soit maintenue en position dans le logement 58 par trois vis 61 vissées radialement de l'intérieur vers l'extérieur depuis l'évidement 54, au travers de l'armature interne 53 et dans la palette 60. Les dimensions des palettes 60 sont telles que leur bout libre n'est séparé que d'un faible intervalle de la surface radiale interne et cylindrique d'une chemise externe 62, qui est montée amovible et avec étanchéité sur le pourtour de l'armature externe 51, de manière à fermer les logements 58 et 59. Ces derniers sont séparés les uns des autres en direction circonférentielle par des portions (en position radiale externe) d'armature externe 51 ainsi que par des plots ou blocs massifs d'élastomère 62 (en position radiale interne) qui sont chacun d'une seule pièce avec les bandes annulaires d'élastomère 52, qu'ils réunissent l'une à l'autre. Ces dernières sont de largeur maximum aux niveaux des deux grands logements 58 et de largeur minimale au niveau des deux petits logements 59 (voir figures 4 et 6), et elles ferment de manière étanche ces logements 58 et 59 entre les deux armatures 51 et 53, tout en autorisant une rotation relative de ces dernières autour du centre C de la rotule sphérique, en leur imposant un rappel élastique vers leur position initiale.

Avant la fermeture des logements 58 et 59 par la mise en place de la chemise externe 62, qui est retenue par des vis 64, vissées dans les portions d'armature externe 51 radialement à l'extérieur des blocs d'élastomère 63 de sorte qu'il subsiste un jeu radial calibré 65 (voir figure 5) entre la chemise externe 62 et ces portions d'armature externe 51, une vessie en caoutchouc 66, étanche et gonflable, et munie d'un petit tube de gonflage 67, est disposée dans chaque petit logement 59, et son tube de gonflage 67 est engagé de l'intérieur dans un perçage latéral 68 ménagé en direction axiale dans la partie de l'armature 51 qui est liée à la manchette 7, ce tube 67 étant raccordé de manière étanche à une valve pneumatique de gonflage 69 montée à la sortie du perçage 68, et accessible de l'extérieur (voir figures 4 et 6) du côté de la manchette 7.

De manière analogue, chacun des grands logements 58 (voir sur la figure 4) est en communication avec l'extérieur par deux perçages latéraux ménagés en direction axiale, l'un 70, dans la partie de l'armature externe 51 par laquelle cette dernière est fixée à la manchette 7, étant raccordé de manière étanche à une valve de remplissage hydraulique 71, montée sur cette partie d'armature 51 et accessible de l'extérieur du côté de la manchette, et un autre perçage 72, dans la partie d'armature 51 du côté du moyeu 10, étant raccordé de manière étanche à une valve de purge 73, accessible de l'extérieur du côté du moyeu 10. L'un des grands logements 58 (en bas sur la figure 4) est en communication avec l'extérieur par un autre perçage latéral 74, ménagé dans la partie d'armature 51 du côté du moyeu 10, et qui est obturé de manière étanche, en service, par une vis de vidange amovible 75, accessible de l'extérieur du côté du moyeu 10.

Par la valve de remplissage 71, on remplit d'une huile de silicone de haute viscosité les logements 58 et 59 et les passages calibrés 65 qui les relient les uns aux autres, et, par les valves de gonflage pneumatique 69, on gonfle les vessies 66, ce qui a pour effet d'assurer une mise en pression statique de l'ensemble hydraulique ainsi obtenu, qui constitue un amortisseur hydraulique rotatif. Le stator de ce dernier est constitué par l'armature interne 53, encastrée sur le moyeu 10, et porte deux palettes de laminage 60 qui sont engagées chacune dans une chambre interne d'amortisseur, délimitée dans le rotor, constitué par l'armature externe 51 liée par la manchette 7 à la pale correspondante, par le grand logement 58 correspondant, par la portion en regard de la surface radiale externe du stator 53 qui entoure le pied de la palette 60 correspondante, et par la portion en regard de la chemise externe 62. Chaque palette 60 subdivise la chambre interne d'amortisseur 58 qui la reçoit en deux chambres d'amortissement 58a et 58b, dont l'une augmente de volume et est mise en compression, et dont l'autre diminue de volume et est mise en détente, lorsque le rotor 51 pivote par rapport au stator 53, en rotation autour du centre C de la rotule sphérique, par cisaillement de l'élastomère 52-63, en raison d'un débattement angulaire de la pale correspondante en traînée. Ces augmentations et diminutions corrélatives des volumes des chambres d'amortissement 58a et 58b provoquent les passages forcés de l'huile de la chambre comprimée, à volume décroissant, vers la chambre en détente, à volume croissant, au travers du petit passage délimité entre le bout libre de chaque palette 60 et la portion de surface cylindrique en regard sur la face interne de la chemise externe 62.

Ce laminage de l'huile entre les palettes 60 et la chemise 62 assure un amortissement du mouvement de rotation, et pour amortir les oscillations angulaires en traînée, les palettes 60 sont de la plus grande efficacité lorsqu'elles sont symétriques l'une de l'autre par rapport au plan de battement BB et perpendiculaires à l'axe longitudinal XX du bras souple 9 et de la pale correspondante 1. Il faut noter à ce propos que, sur le moitié supérieure de la figure 2, la coupe du dispositif de palier combiné a été représentée après rotation de 90° par rapport au reste de la coupe du rotor, dans un but de clarté du dessin, et non parce que les palettes 60 sont symétriques l'une de l'autre par rapport au plan de traînée.

Dans cette réalisation, l'élastomère visco-élastique 52-63 de la rotule sphérique assure également, en plus du rappel élastique en battement et en traînée déjà mentionné, un amortissement du mouvement de rotation en traînée, mais cet amortissement est secondaire par rapport à celui assuré par le laminage de l'huile par les palettes 60, au cours des déplacements angulaires en traînée à partir de la position radiale initiale de la pale correspondante comme au cours des retours élastiques vers cette position initiale.

Les logements 59 contenant les vessies pneumatiques gonflées 66 délimitent deux chambres hydrauliques de compensation, qui compensent les variations de volume de l'huile de l'amortisseur pouvant résulter éventuellement de différences entre les variations de volume des chambres d'amortissement comprimées et détendues, et surtout des dilatations thermiques de cette huile, et ces compensations sont assurées par compression des vessies gonflées 66.

De plus, les passages 65 de communication entre les chambres de compensation 59 et les chambres d'amortissement 58a et 58b, qui sont définis par le jeu de montage de la chemise externe 62 par rapport à l'armature externe 51, sont calibrés de façon à constituer un filtre dynamique pour les fréquences de fonctionnement de l'amortisseur hydraulique rotatif (de 16 à 21 Hz pour un rotor arrière, et de 4 à 6 Hz pour un rotor principal).

Simultanément, les chambres hydrauliques 59 remplissent la fonction de chambres de compensation d'un dispositif hydraulique de rattrapage automatique du jeu du palier cylindrique d'incidence, compensant l'usure par frottement des bagues 55 de ce palier, afin de ne pas réduire l'efficacité de ce dernier. Le rattrapage de jeu est obtenu hydrauliquement, par la mise en communication de chaque chambre de compensation 59 avec le volume annulaire délimité dans chacune des gorges de maintien des bagues de frottement 55, entre, d'une part, les joints élastiques 56, 57 et les demi-bagues 55a et 55b, et, d'autre part, le fond de la gorge correspondante, ces communications étant assurées par des fines canalisations 78 percées au travers de l'armature interne 53 (voir figure 6). Les joints élastiques 56 et 57 assurent ainsi non seulement la suspension et la retenue des demi-bagues 55a et 55b à l'armature interne 53, mais également l'étanchéité du dispositif hydraulique de rattrapage automatique de jeu, et permettent le degré de liberté radiale des demi-bagues dont ils cloisonnent également le jeu annulaire.

Le rattrapage de jeu, en fonctionnement statique, s'effectue par déplacement diamétral ou radial des demi-bagues 55a et 55b contre le manchon 46 du palier sec cylindrique d'incidence, sous l'action de la pression statique de l'huile de l'amortisseur, qui est déterminée par la pression de gonflage des vessies pneumatiques 66. En fonctionnement dynamique, le palier d'incidence est bloqué sans jeu radial du fait que les fines canalisations 78 reliant les fonds des gorges de maintien aux chambres de compensation 59 sont calibrées de façon à constituer également un filtre dynamique des fréquences de fonctionnement de l'amortisseur.

Un exemple préféré de réalisation du dispositif hydraulique de rattrapage automatique de jeu est schématiquement représenté sur les figures 8 à 10, sur lesquelles on retrouve les armatures externe 51 et interne 53 et l'élastomère en bandes 52 de la rotule sphérique, les deux bagues autolubrifiantes 55, constituées chacune des deux demi-bagues 55a et 55b du palier sec, les chambres hydrauliques de compensation 59 contenant chacune une vessie pneumatique gonflée 66 à tube de gonflage 67, et les fines canalisations 78 reliant les chambres 59 aux fonds des gorges de maintien des bagues 55.

Mais, dans cette réalisation, les deux joints élastiques annulaires et latéraux 56, rattachant les demi-bagues 55a et 55b d'une même bague aux parois latérales d'une même gorge dans l'exemple des figures 4 à 7, ont été remplacés par un unique joint élastique annulaire 76, en élastomère injecté (le même que celui des bandes 52 de la rotule sphérique) et de section transversale en forme de U, dans lequel sont engagées les demi-bagues 55a et 55b correspondantes. Les deux ailes latérales 79 du joint en U 76 sont adhérisées intérieurement aux faces latérales des demi-bagues 55a et 55b et extérieurement aux parois latérales de la gorge, tandis que la face arrière ou radiale externe de l'âme 80 du joint en U 76 n'est pas adhérisée contre le fond de la gorge correspondante, dans lequel débouchent les canalisations 78. Ceci est obtenu en interposant un produit démoulant entre le fond de la gorge et l'âme 80 du joint en U 76 avant la vulcanisation des ailes 79 de ce dernier contre les demi-bagues et les parois latérales de la gorge. La disposition relative d'une bague 55, du joint en U 76, de la gorge de l'armature interne 53 et d'une canalisation 78 est clairement représentée sur la figure 10, qui est un détail de la figure 9. Dans cet exemple également, les jeux annulaires entre les extrémités des deux demi-bagues 55a, 55b logées dans un même joint en U 76 sont comblés par des raccords en élastomère 77 qui relient l'une à l'autre les deux ailes 79 de ce joint en U 76.

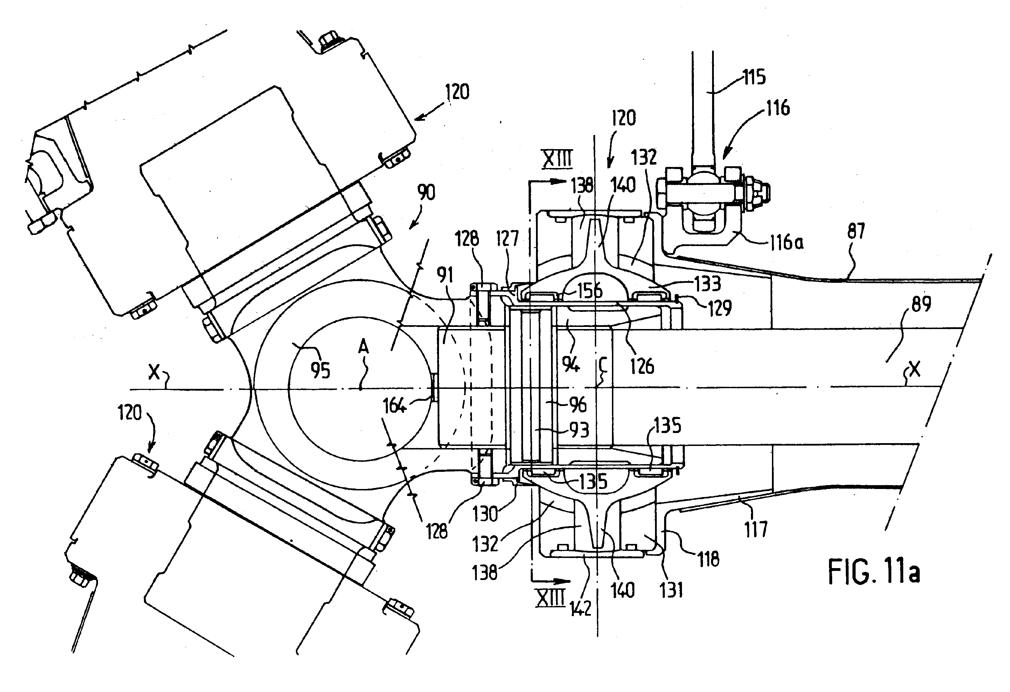

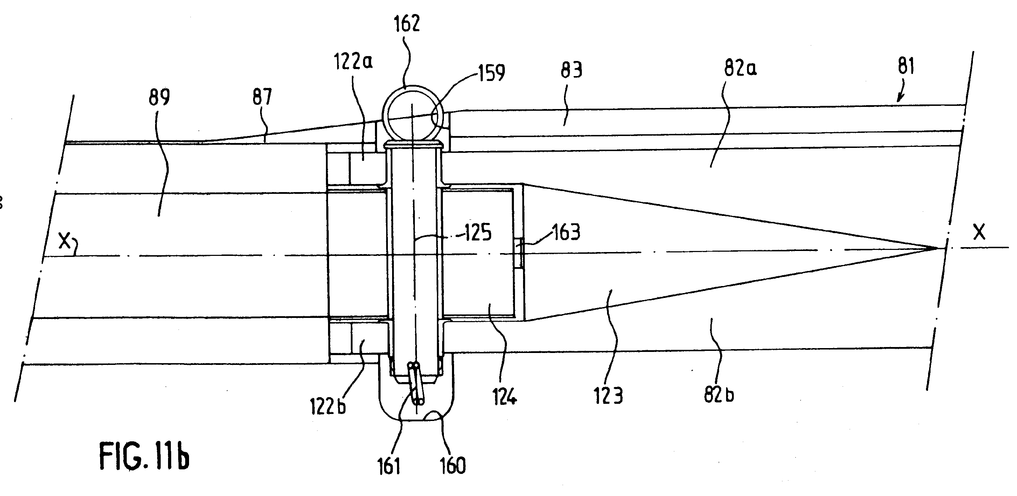

Sur les figures 11a, 11b, 12a, 12b et 13 on a représenté un autre exemple de rotor arrière d'hélicoptère incorporant des dispositifs combinés de palier d'incidence cylindrique à rotule sphérique visco-élastique et à amortisseur hydro-élastique intégré, analogues à celui précédemment décrit.

Comme le rotor arrière tripale de cet exemple est fonctionnellement équivalent au rotor arrière quadripale décrit en référence aux figures 1, 3 à 10 et à la moitié supérieure de la figure 2, on se limitera, dans ce qui suit, à décrire plus particulièrement les différences de structure qui sont propres à ce nouvel exemple.

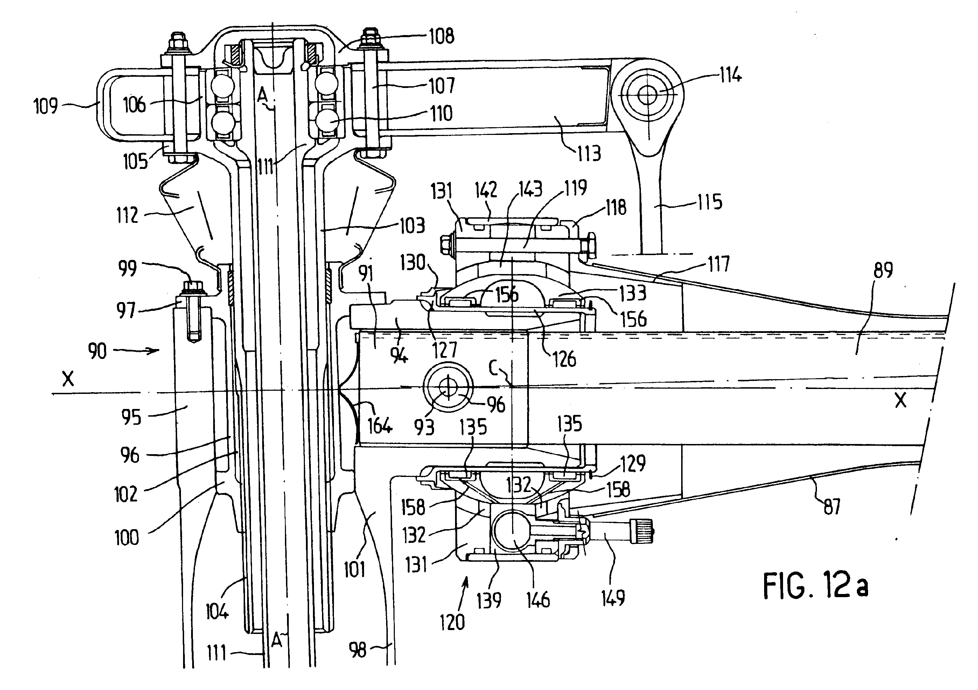

Chacune des trois pales 81 est reliée au moyeu 90 par un bras souple 89 et par une manchette rigide tubulaire 87, laquelle est réalisée en composite à fibres de carbone et est fixée à l'armature externe 131 d'un dispositif de palier combiné 120 par une douille 117 emmanchée et retenue dans l'extrémité interne de la manchette rigide 87 ayant une bride radiale 118 rabattue autour et vissée contre l'armature 131 par des ensembles vis-écrou 119 traversant toute l'armature 131 (voir figure 12a) et dont certains assurent simultanément la fixation, sur la face externe de la bride 118, d'une chape latérale 116a dans laquelle est montée l'articulation à rotule 116 de l'extrémité correspondante de la bielle de commande de pas 115. Comme représenté sur la figure 11a, les deux palettes de laminage 140 de l'amortisseur hydraulique rotatif sont d'une seule pièce avec l'armature interne-stator 133, reliée par les bandes d'élastomère 132 de la rotule sphérique visco-élastique à l'armature externe-rotor 131, à chambres hydrauliques d'amortisseur 138 et de compensation 139 fermées vers l'extérieur par la chemise externe 142.

Dans cet exemple, une seule chambre de compensation 139 est prévue dans un logement inférieur de l'armature 131 (voir le bas de la figure 12a) et contient une vessie étanche 146 gonflable par la valve pneumatique 149. La chambre de compensation 139 est reliée par une fine canalisation 158 au fond de chacune des deux gorges de maintien dans lesquelles les bagues autolubrifiantes 135 sont retenues par des joints élastiques en U 156. Le fond du logement présenté par l'armature 131 dans sa partie supérieure (voir figure 12a) est rempli par un bloc massif d'élastomère 143 qui raccorde l'une à l'autre les deux bandes latérales 132 d'élastomère.

Les bagues 135 et l'armature interne 133 du palier d'incidence cylindrique , ainsi que la rotule sphérique visco-élastique et l'amortisseur hydro-élastique de rotation intégrés, qui l'entourent et lui sont concentriques, peuvent se déplacer axialement en translation le long du manchon cylindrique 126 du palier lisse d'incidence, sur une course limitée vers l'extérieur par un circlip 129, monté sur ce manchon 126, et, vers l'intérieur, par un épaulement 127 du manchon 126 qui est encastré sur et autour d'un bras de moyeu tubulaire et radial 94, sur lequel le manchon 126 est de plus directement retenu par des vis 128. Une bavette souple périphérique 130, montée autour de l'épaulement 127, présente une lèvre en appui élastique contre la surface sphérique externe de l'armature interne 133, afin d'empêcher la pénétration de poussières dans le palier lisse.

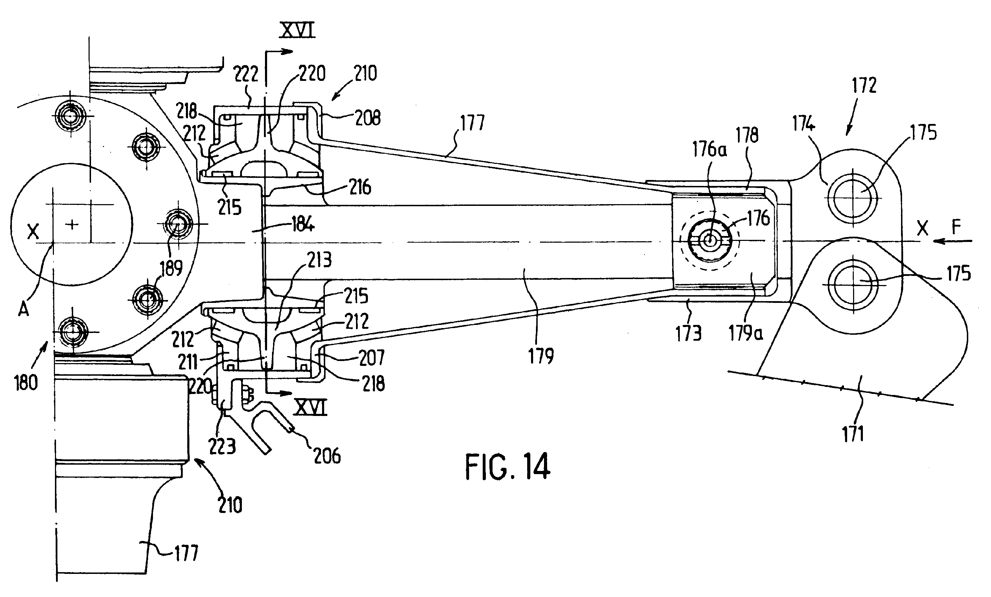

L'emplanture 91 du bras 89, surépaissie ou protégée par une douille, est emmanchée et retenue dans le bras de moyeu tubulaire 94, au-delà du centre C du palier combiné 120 vers l'axe A du rotor, par une broche 93 d'axe contenu dans le plan de rotation du rotor et perpendiculaire à l'axe longitudinal XX du bras souple 89 et de la pale 81, et cette broche 93 est retenue dans une douille coaxiale 96 logée dans des perçages coïncidants traversant l'emplanture 91 et le bras de moyeu 94, qui sont cylindriques (voir figure 13), ces perçages coïncidants étant ménagés sensiblement au niveau de l'épaulement 127 du manchon 126 qui assure ainsi le maintien en place de la broche 93 et de la douille 96 après leur montage.

Les trois bras de moyeu 94, tubulaires et radiaux par rapport à l'axe A du rotor, sont d'une seule pièce avec un corps de moyeu 95, tubulaire et axial, lui-même d'une seule pièce avec l'extrémité 101 de l'arbre rotor 98, coaxialement à ce dernier, qui est entraîné en rotation autour de l'axe A. Dans cet exemple, on retrouve que l'arbre de commande central et non rotatif 111 est monté coulissant axialement dans un tronçon d'arbre tubulaire 103, dont l'extrémité externe par rapport à l'arbre rotor 98 est évasée et présente la bride radiale 105 et le collet axial 106 permettant respectivement la fixation par des ensembles vis-écrou 107 et une cloche externe de protection 108, du tronçon d'arbre 103 au plateau de commande 109, de structure en caisson en composite à fibres de carbone, et le blocage axial de ce tronçon d'arbre 103 sur les bagues externes d'une butée à billes double 110, dont les bagues internes sont axialement bloquées sur l'extrémité axiale externe de l'arbre central de commande 111.

Bien entendu, le plateau de commande 109 ne comporte que trois bras radiaux de commande de pas 113 (un pour chaque pale 81), dont l'extrémité radiale externe de chacun est conformée en chape de logement de l'articulation à rotule 114 sur l'extrémité correspondante de la bielle de commande de pas 115. Les ensembles vis-écrou 107 assurent simultanément la fixation, contre la bride radiale 105 de l'arbre central 111, de l'extrémité axiale externe d'une manchette ou d'un soufflet tubulaire souple 112, extensible et de préférence élastiquement déformable, par exemple en caoutchouc, dont l'extrémité tubulaire axiale interne est retenue autour de l'extrémité axiale externe d'un second tronçon d'arbre tubulaire 96, muni d'une bride radiale externe 97 par laquelle ce tronçon d'arbre 96 est solidarisé à l'extrémité axiale externe du corps de moyeu 95. Cette manchette extensible 112 assure la protection contre la pénétration de corps étrangers dans la liaison coulissante et rotative reliant l'arbre de commande 111 au corps de moyeu 95. A cet effet, le second tronçon d'arbre tubulaire 96 est engagé coaxialement dans le corps de moyeu 95, dans lequel il est centré, à proximité de son extrémité axiale interne, par une portée annulaire de centrage 100, et autour du premier tronçon d'arbre tubulaire 103, dont il est solidaire en rotation par ses cannelures axiales internes 102 en prise avec les cannelures axiales externes 104 du tronçon d'arbre 103. Ce dernier coulisse ainsi axialement dans le tronçon d'arbre 96 et est entraîné en rotation par ce dernier, solidaire du corps de moyeu 95 et de l'arbre rotor 98.

Une autre différence importante présentée par cet exemple par rapport aux exemples précédents est que le bras souple 89, associé à chaque pale 81, n'est pas d'une seule pièce avec le longeron 82 de cette dernière, mais accouplé à ce longeron par une liaison amovible, le bras souple 89 pouvant être considéré comme constituant un élément du moyeu, alors que la manchette rigide tubulaire 87 reste dans le prolongement de la coque profilée 83 de la pale 81, et peut être d'une seule pièce avec elle.

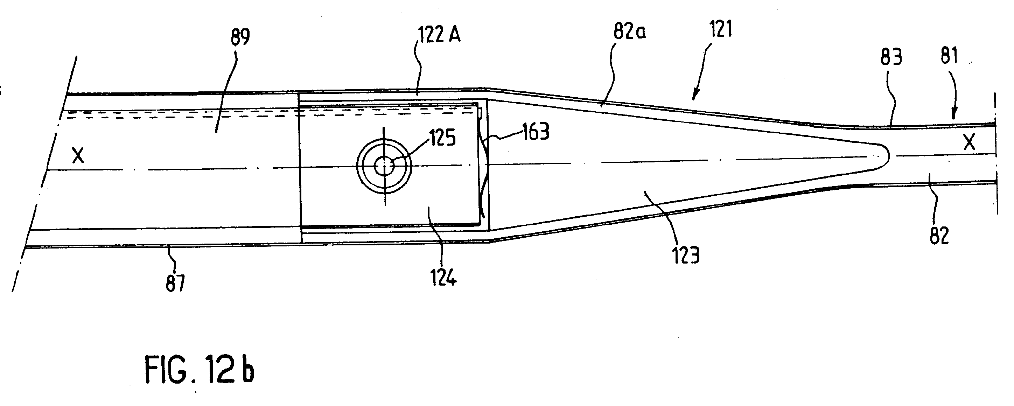

Le pied 121 de la pale 81 est surépaissi et présente une épaisseur qui augmente progressivement, dans le plan de battement, depuis l'épaisseur de la partie courante 81 de la pale jusqu'au diamètre de l'extrémité externe de la manchette 87, comme représenté sur la figure 12b. Mais, dans le pied de pale 121, le longeron 82 de celle-ci se subdivise en deux moitiés avant 82a et arrière 82b, séparées par un espace qui croît progressivement en largeur (dans le plan de traînée) et en hauteur (dans le plan de battement) jusqu'aux extrémités internes 122a et 122b des moitiés de longeron 82a et 82b, qui sont parallèles l'une à l'autre et forment une fourche. Cet espace interne est occupé par un coin de remplissage 123 en matière alvéolaire.

L'extrémité externe 124 du bras souple 89, qui peut être surépaissie ou protégée par une douille, est engagée entre les deux branches 122a et 122b du longeron de pale 82 en fourche 82a, 82b, et est retenue en position par une broche transversale 125, d'axe perpendiculaire à l'axe longitudinal XX de la pale 81 et s'étendant dans le plan de traînée de cette dernière, c'est-à-dire parallèlement à la broche 93 de liaison de l'emplanture 91 du bras souple 89 dans le bras radial tubulaire 94 du moyeu 90. La broche 125 est introduite dans des perçages coïncidants ménagés au travers des branches 122a et 122b du longeron en fourche et de l'extrémité externe 124 du bras souple 89, après passage dans une ouverture 159 ménagée dans la coque de pale 83 au niveau du bord d'attaque, et jusqu'à ce que le bout de la broche fasse saillie dans un évidement 60 prévu dans le corps de remplissage entre la branche 122b du longeron et la coque de pale, dans la partie adjacente au bord de fuite de la pale, une agrafe métallique et élastique 161 étant montée dans cet évidement 160 sur le bout de la broche 125 afin de la retenir en position, alors qu'un anneau de traction 162, solidaire de l'autre extrémité de la broche 125, permet de la retirer après enlèvement de l'agrafe 161, afin de désaccoupler la pale 81 du bras souple 89 correspondant.

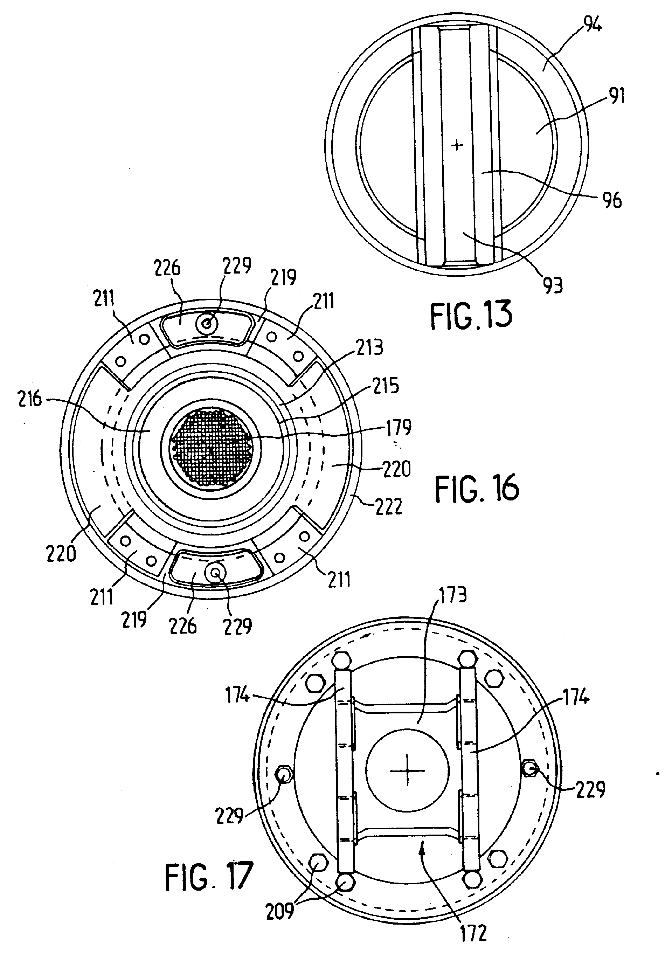

Le dispositif de palier combiné, tournant, pour la commande du pas, et rotulant, pour le rappel élastique de la pale en battement et en traînée, avec amortissement interne des oscillations angulaires de la pale en traînée, tel que décrit dans les exemples précédents, peut également équiper un rotor principal, par exemple quadripale, comme représenté sur les figures 14 à 17.

Dans ce dernier exemple, le moyeu 180 comprend quatre extensions radiales tubulaires 184, d'une seule pièce les unes avec les autres, l'ensemble ainsi formé étant solidarisé par une couronne d'ensembles vis-écrou 189-190 sur la bride radiale externe 191 de l'extrémité supérieure du mât rotor 188, lequel porte un support annulaire en U 192, ouvert vers l'extérieur, et dans lequel est monté coulissant radialement, de manière connue, un anneau réciproque 193 d'un dispositif de butées de battement destiné à limiter les mouvements de battement des pales 171 vers le bas, aux vitesses faibles ou nulle de rotation du rotor.

Chaque bras souple 179 est, comme dans les exemples précédents, retenue par son emplanture dans l'extension 184 correspondante, et la manchette tubulaire rigide 177, de forme tronconique, qui l'entoure jusqu'à proximité du moyeu 180, est en appui sur l'extension radiale 184 correspondante par un dispositif de palier combiné 210 pratiquement équivalent à celui décrit dans l'exemple précédent. On retrouve les armatures externe 211 et interne 213 formant rotor et stator respectivement de l'amortisseur hydraulique de rotation, les bandes d'élastomère 212 de la rotule sphérique de rappel élastique, les deux bagues 215 logées chacune dans un joint étanche et élastique en U adhérisé aux parois latérales d'une gorge de maintien dans l'armature interne 213, le manchon 216 encastré autour de l'extension radiale 184 correspondante du moyeu et formant, avec les deux bagues 215, le palier sec cylindrique d'incidence, les deux chambres internes d'amortisseur 218, logeant chacune une palette de laminage 220 d'une seule pièce avec l'armature interne 213, les deux chambres de compensation 219, logeant chacune une vessie gonflable 226 reliée à sa valve de gonflage 229, la chemise externe 222 fermant radialement l'amortisseur, et les canalisations 238 reliant les chambres de compensation 219 aux fonds des gorges, derrière les bagues 215, pour le rattrapage hydraulique et automatique du jeu du palier lisse, et le fonctionnement de ce dispositif de palier combiné ne sera pas à nouveau décrit, car il est identique à celui de l'exemple précédent.

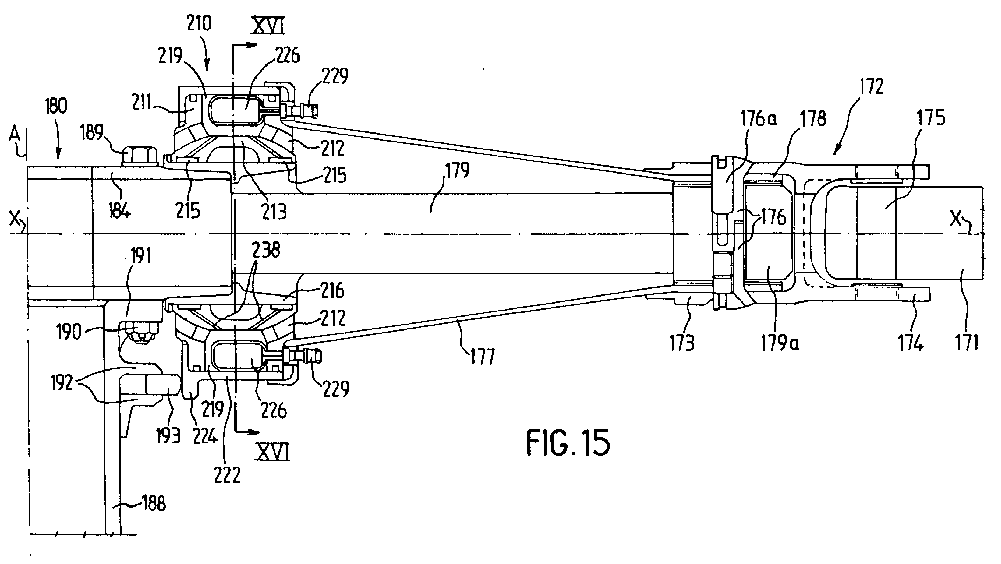

Mais de plus, dans cet exemple, la chemise externe 222, qui recouvre la face latérale interne (vers l'axe A du rotor) de l'armature externe 211, porte un bossage 223 en saillie latérale sensiblement dans le plan de traînée, et sur lequel une chape 206 d'articulation du levier de commande de pas est boulonnée (voir figure 14). De plus, cette chemise externe 222 porte également un talon 224 en saillie vers le bas (figure 15) et qui constitue la butée basse coopérant avec l'anneau réciproque 193 du dispositif de limitation des battements vers le bas.

Comme dans les exemples précédents, l'extrémité interne en forme de bride radiale 207 de la manchette 177 est fixée contre l'armature externe 211 du dispositif de palier 210 par une couronne de vis 209, mais ces vis 209 coopèrent avec un collet 208 de fixation et centrage recouvrant également la chemise 222.

Par contre, dans cet exemple, les extrémités cylindriques externes 178 et 179a respectivement de la manchette 177 et du bras souple 179 sont fixées l'une à l'autre par deux demi-broches tubulaires 176 à tête conique et tige emboîtable l'une dans l'autre, qui sont serrées l'une contre l'autre par un boulon central 176a. Les deux extrémités externes 178 et 179a, l'une dans l'autre, sont de plus simultanément engagées et retenues par les mêmes éléments 176-176a dans une chape ou un manchon interne 173 d'une pièce de liaison 172 à la pale 171. Cette pièce de liaison 172 est conformée en double chape externe 174 par deux branches parallèles et symétriques par rapport au plan de traînée, et percées chacune de deux alésages coaxiaux avec les alésages de l'autre branche afin de recevoir deux broches 175 de retenue du pied de pale 171, l'une des broches 175 étant amovible pour permettre le pivotement de la pale 171 autour de l'autre, comme représenté sur la figure 14. Les axes des deux broches 175 sont dans un même plan, perpendiculaire à l'axe longitudinal XX du bras 179, ainsi qu'au plan de rotation du rotor, et ils sont parallèles à l'axe des deux demi-broches 176 assemblées et serrées l'une contre l'autre.

Dans ce cas également, le bras 179 peut être considéré comme un élément du moyeu, ainsi d'ailleurs que la pièce de liaison 172, à laquelle la pale correspondante 171 s'accouple de manière amovible. De même, la manchette tubulaire 177 est un élément du moyeu.

Revenant à l'exemple des figures 11a à 12b, on notera enfin la présence d'une petite lame-ressort 163 entre le coin de remplissage 123 et l'extrémité externe 124 du bras souple 89, et celle d'une seconde petite lame-ressort 164 entre l'emplanture 91 de ce bras 89 et le second tronçon d'arbre tubulaire 96 du moyeu 90, afin d'assurer une continuité électrique entre la pale et le moyeu et de permettre d'évacuer vers le fuselage l'électricité statique générée par les pales en matériaux non métalliques lors de leur rotation.

## Revendications

1. Dispositif de palier combiné (40) d'incidence, à rappel élastique en traînée et en battement et à amortissement incorporé en traînée, destiné à l'équipement d'un rotor à pas variable de giravion, dont chaque pale (1) est retenue au moyeu (10) du rotor par un bras allongé formant tirant (9) souple en torsion et flexion, sensiblement radial par rapport à l'axe (A) de rotation du rotor, qui autorise les oscillations de battement et de traînée de la pale (1) ainsi que les variations angulaires de son pas, et qui est entouré sans contact, jusqu'à proximité de moyeu (10) par une manchette tubulaire (7) rigide (7) en torsion et flexion, sollicitée extérieurement par un levier (35) de commande du pas de la pale (1), et dont l'extrémité la plus proche de l'axe (A) du rotor est destinée à être reliée au moyeu (10) par ledit dispositif de palier combiné (40), qui est destiné à entourer l'emplanture (11) du bras souple (9) sur le moyeu (10) et qui comprend une articulation à rotule sphérique centrée sur l'axe (XX) du bras souple (9) et comportant au moins un élément (42) d'un matériau visco-élastique à grande rémanence de déformation, sensiblement en forme de portion de calotte sphérique, qui est retenu entre deux supports rigides (41,43), dont l'un (41), de forme annulaire, est destiné à être solidarisé à la manchette (7) et dont l'autre (43) est destiné à être relié au moyeu (10), l'articulation à rotule sphérique permettant, autour de son centre (C), une liberté relative de mouvement angulaire de la pale (1) en battement et en traînée, par cisaillement du matériau visco-élastique (42) qui assure un rappel élastique de la pale (1) en battement et en traînée, ainsi qu'un amortissement des mouvements angulaires de la pale (1) en traînée, ledit dispositif de palier combiné (40) étant caractérisé en ce qu'il comprend également un palier lisse cylindrique (45, 46) d'articulation d'incidence et d'encastrement sur le moyeu (10), qui est lié au support rigide (43) de l'articulation à rotule sphérique, destiné à être lié au moyeu (10), et qui est sensiblement concentrique à l'autre support rigide (41) de l'articulation à rotule sphérique, elle-même montée concentriquement au palier lisse cylindrique (45,46) qui est radialement en série avec cette dernière par rapport à l'axe (XX) du bras souple (9).

2. Dispositif de palier combiné selon la revendication 1, caractérisé en ce que l'articulation à rotule sphérique (131,132,133) est montée libre en translation sur un jeu axial (129,127) limité parallèlement à l'axe (XX) du palier lisse cylindrique (126,135).

3. Dispositif de palier combiné selon l'une des revendications 1, 2, destiné à être solidarisé à la manchette (7) par celui des deux supports rigides (41,43) qui est en position radiale externe (41) sur l'articulation à rotule sphérique, caractérisé en ce que l'autre support rigide (43), en position radiale interne, de l'articulation à rotule sphérique est lié au palier lisse cylindrique (45, 46), qui est un palier sec, entouré par l'articulation à rotule sphérique, et comprenant un manchon cylindrique (46) destiné à être encastré sur le moyeu (10) et autour duquel le support rigide interne (43) tourillonne par au moins deux bagues (45) autolubrifiantes espacées selon l'axe (XX) du manchon (46), et logées chacune dans une gorge de maintien annulaire ménagée dans la face radiale interne du support rigide interne (43).

4. Dispositif de palier combiné selon la revendication 3, caractérisé en ce que chaque bague autolubrifiante (55) comprend deux demi-bagues (55a, 55b) de forme hémicylindrique et logées dans une même gorge annulaire de maintien.

5. Dispositif de palier combiné selon l'une des revendications 1 à 4, caractérisé en ce qu'il comprend également un dispositif de rattrapage automatique du jeu (59,66,78,56,57) du palier lisse cylindrique (55,46).

6. Dispositif de palier combiné selon la revendication 5, caractérisé en ce que le dispositif de rattrapage automatique de jeu est un dispositif hydraulique comprenant au moins une chambre de compensation (59) remplie d'un fluide hydraulique pressurisé par au moins un mécanisme de pressurisation (66) et en communication avec chacune des gorges annulaires de maintien, entre la bague (55) correspondante et le fond de la gorge, par au moins une canalisation (78), de sorte que le rattrapage de jeu est assuré par déplacement diamétral des bagues (55) sous l'action de la pression du fluide hydraulique dans chaque chambre de compensation (59).

7. Dispositif de palier combiné selon la revendication 6, caractérisé en ce que chaque bague (55) est reliée de manière étanche à chacune des deux faces latérales de la gorge annulaire dans laquelle elle est logée par un joint annulaire souple (56), de préférence élastiquement déformable.

8. Dispositif de palier combiné selon la revendication 7, caractérisé en ce que chaque bague (55a,55b) est engagée dans un joint d'étanchéité souple et annulaire, de section transversale en forme de U (76) logé dans la gorge de maintien correspondante, aux faces latérales de laquelle les ailes (79) du joint en U (76) sont solidarisées, tandis que la base (80) du joint en U (76), entre la bague (55a, 55b) et le fond de la gorge, n'est pas solidarisée à ce fond de gorge, dans lequel débouche au moins une canalisation (78) de communication avec au moins une chambre hydraulique de compensation (59).

9. Dispositif de palier combiné selon l'une des revendications 4 à 8, caractérisé en ce que chaque demi-bague (55a, 55b) est reliée par ses deux extrémités aux deux extrémités de l'autre demi-bague (55b,55a) logée dans la même gorge de maintien par deux raccords (77) souples, de préférence élastiquement déformables.

10. Dispositif de palier combiné selon la revendication 9, telle que rattachée à la revendication 8, caractérisé en ce que chacun des deux raccords (77) souples est solidaire du joint en U (76) dont il raccorde les deux ailes (79) l'une à l'autre.

11. Dispositif de palier combiné selon l'une des revendications 7 à 10, caractérisé en ce que les joints (76) et raccords souples (77) sont des éléments en un matériau visco-élastique, tel qu'un élastomère, et de préférence le même que celui du ou des éléments visco-élastiques (52) de l'articulation à rotule sphérique.

12. Dispositif de palier combiné selon l'une des revendications 6 à 11, caractérisé en ce que le mécanisme de pressurisation du fluide hydraulique de chaque chambre de compensation (59) comprend au moins une membrane souple (66), de préférence élastiquement déformable, délimitant au moins partiellement ladite chambre de compensation (59).

13. Dispositif de palier combiné selon la revendication 12, caractérisé en ce que la membrane souple de chaque chambre de compensation (59) est une vessie étanche (66) logée dans la chambre de compensation (59) correspondante et gonflable par une valve (71) d'alimentation en gaz, qui est accessible de l'extérieur du palier (40').

14. Dispositif de palier combiné selon l'une des revendications 6 à 13, caractérisé en ce que le dispositif hydraulique de rattrapage de jeu est au moins partiellement intégré dans l'articulation à rotule sphérique (51,52,53), au moins une chambre de compensation (59) étant délimitée au moins partiellement entre les supports rigides interne (53) et externe (51) et/ou dans un évidement de l'un au moins (51) des supports rigides de la rotule sphérique, et l'étanchéité de la chambre de compensation (59) étant assurée par au moins un élément (52) en matériau visco-élastique de la rotule sphérique.

15. Dispositif de palier selon l'une des revendications 1 à 5, caractérisé en ce que la rotule sphérique comprend un unique élément en matériau visco-élastique (42), qui est une bande d'élastomère à haut hystérésis en forme de calotte sphérique adhérisée par ses faces radiales interne et externe, respectivement concave et convexe, aux faces radiales respectivement externe convexe et interne concave des supports rigides respectivement interne (53) et externe (51) et le manchon (46) du palier lisse cylindrique présente une bride radiale interne (47) destinée à être boulonnée (48) sur une bride radiale externe (49) d'un fourreau (12) de fixation de l'emplanture (11) du bras souple (9) correspondant sur le moyeu (10).

16. Dispositif de palier combiné selon l'une des revendications 1 à 15, caractérisé en ce qu'il comprend de plus un amortisseur hydraulique des mouvements angulaires de la pale (1) entraînée, monté en série radiale avec le palier lisse cylindrique (55, 46), amortisseur qui est de type rotatif et qui comporte un stator (53) et un rotor (51) coaxiaux délimitant entre eux au moins une chambre interne d'amortisseur (58) remplie d'un fluide hydraulique tel qu'une huile de silicone de haute viscosité, et au moins une palette (60) solidaire du rotor (51) ou du stator (53) et subdivisant la chambre interne (58) en deux chambres d'amortissement (58a, 58b) reliées l'une à l'autre par des moyens de laminage, de sorte que tout mouvement de rotation relatif du rotor (51) et du stator (53) autour de leur axe commun (XX) entraîne une rotation de la palette (60) dans la chambre interne (58) en comprimant l'une des deux chambres d'amortissement (58a, 58b) et en provoquant une détente dans l'autre, et assure ainsi un amortissement du mouvement de rotation par laminage, au travers des moyens de laminage, du fluide circulant de la chambre d'amortissement (58a, 58b) comprimée vers la chambre d'amortissement détendue (58b, 58a), le stator étant solidaire du support rigide (53) de la rotule sphérique,qui est lié au palier lisse cylindrique (55, 46) et le rotor étant solidaire du support rigide (51) de la rotule sphérique,qui est destiné à être solidarisé à la manchette tubulaire correspondante (7).

17. Dispositif de palier combiné selon la revendication 16, caractérisé en ce que les moyens de laminage sont associés à la palette (60).

18. Dispositif de palier combiné selon la revendication 17, caractérisé en ce que les moyens de laminage sont constitués par un étroit passage délimité entre le bout libre de la palette (60) portée par le rotor (51) ou le stator (53) et une surface en regard sur le stator (53) ou le rotor (51).

19. Dispositif de palier combiné selon l'une des revendications 16 à 18, caractérisé en ce que l'étanchéité de chaque chambre interne (58) de l'amortisseur est assurée par au moins un organe (52) en matériau visco-élastique reliant le rotor (51) au stator (53) et assurant, avec un amortissement interne, un rappel élastique du rotor (51) vers sa position initiale par rapport au stator (53).

20. Dispositif de palier combiné selon l'une des revendications 16 à 19, caractérisé en ce que chaque chambre interne (58) de l'amortisseur hydraulique de rotation est reliée par au moins un passage de communication (65) à au moins une chambre de compensation (59) des dilatations du fluide hydraulique pressurisé par un mécanisme de pressurisation (66) assurant la mise en pression statique de l'amortisseur.

21. Dispositif de palier combiné selon la revendication 20, caractérisé en ce que le mécanisme de pressurisation comprend au moins une membrane (66) souple, de préférence élastiquement déformable, qui délimite au moins partiellement la chambre de compensation (59) des dilatations correspondante.

22. Dispositif de palier combiné selon la revendication 21, caractérisé en ce que la membrane souple du mécanisme de pressurisation est une vessie étanche (66) logée dans la chambre de compensation (59) des dilatations correspondante et gonflable par une valve (69) d'alimentation en gaz, accessible de l'extérieur du palier (40').

23. Dispositif de palier combiné selon l'une des revendications 20 à 22, caractérisé en ce que le ou les passages de communication (65) entre une chambre de compensation (59) des dilatations et une chambre interne de l'amortisseur (58) est ou sont calibrés de façon à constituer un filtre dynamique pour les fréquences de fonctionnement de l'amortisseur.

24. Dispositif de palier combiné selon l'une des revendications 20 à 23, caractérisé en ce qu ' au moins une chambre de compensation (59) des dilatations, et son mécanisme de pressurisation (66), de préférence à vessie gonflable ,constituent simultanément et respectivement une chambre de compensation du dispositif hydraulique de rattrapage automatique de jeu et son mécanisme de pressurisation, de préférence à vessie gonflable.

25. Dispositif de palier combiné selon la revendication 24, caractérisé en ce que la ou les canalisations (78) reliant une chambre de compensation (59) à une gorge de maintien d'une bague (55) du palier lisse cylindrique est ou sont calibrées de façon à constituer un filtre dynamique pour les fréquences de fonctionnement de l'amortisseur.

26. Dispositif de palier combiné selon l'une des revendications 20 à 25, caractérisé en ce que l'étanchéité de la chambre de compensation (59) des dilatations est assurée par au moins un élément (52) en matériau visco-élastique de la rotule sphérique (51,52,53).

27. Dispositif de palier combiné selon la revendication 26, caractérisé en ce que l'amortisseur hydraulique (51,52,53,60) est au moins partiellement intégré dans l'articulation à rotule sphérique (51,52,53), au moins une chambre interne (58) de l'amortisseur étant délimitée au moins partiellement entre les supports rigides interne (53) et externe (51) et/ou dans un évidement de l'un au moins (51) des supports rigides de la rotule sphérique.

28. Dispositif de palier combiné selon la revendication 27, caractérisé en ce que le stator, le rotor et au moins un organe en matériau visco-élastique qui les relie l'un à l'autre sont constitués respectivement par le support rigide interne (53), le support rigide externe (51) et au moins un élément en matériau visco-élastique (52) de la rotule sphérique.

29. Dispositif de palier combiné selon la revendication 28, caractérisé en ce que l'amortisseur hydraulique de rotation comprend deux palettes de laminage (60), radiales et symétriques l'une de l'autre par rapport à l'axe du palier lisse cylindrique (XX), et qui sont solidaires du support interne (53) de la rotule sphérique et s'étendent chacune perpendiculairement au plan de traînée et symétriquement au-dessus et au-dessous du plan de traînée de la pale (1) correspondante, dans l'une de deux chambres (58) délimitées chacune par un évidement s'étendant radialement et en direction circonférentielle dans le support rigide externe (51), par une partie de la surface radiale externe du support rigide interne (53) qui est en regard de l'évidement correspondant du support externe (51) et autour du pied de la palette (60) engagée dans cet évidement, et par des portions de surface annulaire du ou des éléments (52) en matériau visco-élastique reliant les deux supports l'un à l'autre.

30. Dispositif de palier combiné selon la revendication 29, caractérisé en ce qu'il comprend deux chambres hydrauliques de compensation (59), symétriques l'une de l'autre par rapport à l'axe (XX) du palier lisse cylindrique (55,46) et par rapport au plan de traînée , chacune étant délimitée par l'un de deux évidements s'étendant radialement et en direction circonférentielle dans le support rigide externe (51), en positions alternées avec les évidements des chambres d'amortisseur (58) en direction circonférentielle, chaque chambre de compensation (59) étant également délimitée par une partie de la surface radiale externe du support rigide interne (53) en regard de l'évidement correspondant et par des portions de surface annulaire du ou des éléments (52) en matériau visco-élastique reliant les deux supports l'un à l'autre, au moins une chambre de compensation (59) étant reliée à chaque gorge de maintien du palier lisse (55,46) par une canalisation (78), de préférence calibrée, qui traverse le support rigide interne (53).

31. Dispositif de palier combiné selon la revendication 30, caractérisé en ce que les évidements des chambres (58, 59) logeant les palettes (60) et/ou de compensation sont fermés radialement vers l'extérieur par une chemise externe (62) montée avec étanchéité et amovible sur le pourtour du support rigide externe (51).

32. Dispositif de palier combiné selon la revendication 31, caractérisé en ce que les passages (65), de préférence calibrés, de communication entre une chambre interne d'amortisseur (58) et une chambre de compensation (59) sont délimités par un jeu radial entre le chemise externe (62) et le support rigide externe (51).

33. Dispositif de palier combiné selon l'une des revendications 30 à 32, caractérisé en ce que chaque chambre interne d'amortisseur (58) est séparée de chacune des chambres de compensation (59), entre lesquelles elle est située en direction circonférentielle, par un plot massif (63) d'élastomère, solidaire du ou des éléments (52) visco-élastiques reliant les deux supports rigides l'un à l'autre (51,53).

34. Dispositif de palier combiné selon l'une des revendications 29 à 33, caractérisé en ce que le ou les éléments visco-élastiques (52) de la rotule sphérique comprennent deux bandes annulaires en forme de calotte sphérique (52) adhérisées latéralement aux deux supports rigides (51, 53) et entre ces derniers, et chacune de largeur maximale aux niveaux des évidements (58) logeant les palettes (60).

35. Dispositif de palier combiné selon la revendication 34, caractérisé en ce que les bandes annulaires visco-élastiques (52) sont de largeur minimum aux niveaux des évidements (59) des chambres de compensation.

36. Dispositif de palier combiné selon l'une des revendications 29 à 35, caractérisé en ce que chaque palette (60) est fixée de manière amovible sur la portion de surface radiale externe du support interne (53) qui forme le fond de l'évidement correspondant (58).

37. Dispositif de palier combiné selon la revendication 36, caractérisé en ce que la fixation amovible de chaque palette (60) sur le support interne (53) est assurée par au moins une vis (61) engagée radialement par l'intérieur dans un évidement (54) ménagé dans la face radiale interne du support interne (53), entre deux portées cylindriques dans chacune desquelles est ménagée l'une des gorges de maintien des bagues (55) du palier lisse cylindrique.

38. Dispositif de palier combiné selon l'une des revendications 30 à 37, caractérisé en ce que le support rigide externe (51) est percé d'au moins trois passages sensiblement axiaux (70,72,74) débouchant chacun dans une chambre interne d'amortisseur (58) et dans l'un desquels est montée une valve de remplissage (71) en fluide hydraulique, qui est accessible de l'extérieur, de préférence du côté de liaison à la manchette tubulaire rigide (7), tandis qu'une valve de purge (73) et une vis de vidange (75) sont montées chacune dans un autre (72, 74) des passages sensiblement axiaux, et sont accessibles de l'extérieur, de préférence du côté destiné à être tourné vers le moyeu (10), le support rigide externe (51) étant de plus percé de deux autres passages sensiblement axiaux (68) et débouchant chacun dans une chambre de compensation (59), et dans chacun desquels est montée une valve (69) de gonflage, accessible de l'extérieur, de préférence du côté de liaison à la manchette (7).

39. Rotor à pas variable pour giravion, utilisable comme rotor principal ou comme rotor arrière d'hélicoptère, comprenant un moyeu (10) de rotor, entraîné en rotation autour d'un axe (A) de rotation du rotor par un arbre rotor (18), des pales (1) dont chacune est retenue au moyeu (10) par l'intermédiaire d'un bras allongé (9) formant tirant, souple en flexion et torsion, sensiblement radial par rapport à l'axe (A) du rotor, qui autorise les oscillations de battement et de traînée et les variations angulaires du pas de la pale (1) correspondante, et qui est entouré sans contact, jusqu'à proximité du moyeu (10), par une manchette tubulaire (7) rigide en flexion et torsion sollicitée extérieurement par un levier (35) de commande du pas de la pale correspondante (1), et dont l'extrémité (37) la plus proche de l'axe (A) du rotor est reliée au moyeu (10) par un dispositif de palier combiné (40) d'incidence, à rappel élastique de la pale (1) correspondante en battement et en traînée, et à amortissement incorporé des mouvements angulaires de la pale (1) en traînée, qui entoure l'emplanture (11) du bras souple (9) correspondant sur le moyeu (10), et qui comprend une articulation à rotule sphérique (41,42,43) centrée (C) sur l'axe (XX) du bras souple et comportant au moins un élément (42) d'un matériau visco-élastique à grande rémanence de déformation, sensiblement en forme de portion de calotte sphérique, qui est retenue entre deux supports rigides (51,53) dont l'un, de forme annulaire (51) est solidarisé à la manchette (7), et dont l'autre (53) est relié au moyeu (10), de sorte que l'articulation à rotule sphérique permette, autour de son centre (C), une liberté relative de mouvement de la pale (1) en battement et en traînée, par cisaillement du matériau visco-élastique (42), qui assure un rappel élastique de la pale en battement et en traînée ainsi qu'un amortissement des mouvements angulaires de la pale en traînée, caractérisé en ce que le dispositif de palier combiné (40, 120, 210) est un dispositif selon l'une des revendications 1 à 38 précédentes.

40. Rotor selon la revendication 39, caractérisé en ce que l'extrémité interne (37) de la manchette (7) est solidarisée au dispositif de palier combiné (40) par vissage (39) d'une bride sensiblement radiale externe (38) portée par la manchette (7) contre le support rigide externe (41) du dispositif de palier.

41. Rotor selon la revendication 40, caractérisé en ce que la bride sensiblement radiale externe (118) est rabattue autour du support externe (131) du dispositif de palier (120) et d'une seule pièce avec une douille (117) emmanchée et retenue dans l'extrémité interne tubulaire de la manchette (87), en matériau composite, et dans le prolongement de la coque profilée (83) de la pale correspondante (81).

42. Rotor selon la revendication 40, caractérisé en ce que l'extrémité externe (8) de la manchette (7) est reliée à l'extrémité interne de la coque profilée (3) de la pale (1) par vissage contre la manchette (7) d'une bride radiale externe (5) d'une douille (4) emmanchée et retenue dans l'extrémité interne tubulaire de la coque profilée (3) de la pale.

43. Rotor selon l'une des revendications 39 à 42, caractérisé en ce que le moyeu (10) comprend un corps central tubulaire (15), coaxial à l'arbre rotor (18), et des extensions radiales (14) par rapport à l'axe (A) du rotor, et en nombre égal au nombre des pales (1), pour la liaison de ces dernières au moyeu (10).

44. Rotor selon la revendication 43, caractérisé en ce qe le moyeu (10) est solidarisé à l'arbre rotor (18) par boulonnage (19,20),contre une bride d'extrémité (21) de l'arbre (18) qui est radiale par rapport à l'axe (A) de ce dernier, de la partie des extensions radiales (14) qui est tournée vers l'arbre (18).

45. Rotor selon la revendication 43, caractérisé en ce que les extensions radiales (94) et le corps tubulaire (95) du moyeu (90) sont d'une seule pièce avec l'extrémité (101) de l'arbre rotor(98).

46. Rotor selon l'une des revendications 43 à 45, caractérisé en ce que le bras souple (9) est prolongé, vers l'axe (A) du rotor, au-delà du centre (C) du dispositif de palier (40) par une partie d'emplanture (11), éventuellement surépaissie, par laquelle le bras souple (9) est fixé à une extension radiale (14) du moyeu (10).

47. Rotor selon la revendication 46, caractérisé en ce que la partie d'emplanture (11) du bras souple (9) est retenue dans un fourreau (12) à bride radiale externe (49) boulonnée (48) sur une bride radiale interne (47) du manchon (46) du palier lisse cylindrique (46, 45), le fourreau (12) étant lui-même retenu dans une extension radiale (14) du moyeu (10) par au moins une broche (13) d'axe sensiblement parallèle à l'axe (A) du rotor et traversant les perçages coïncidants dans la partie d'emplanture (11), le fourreau (12) et l'extension radiale (14).

48. Rotor selon la revendication 46, caractérisé en ce que le manchon (126) du palier lisse cylindrique (135, 126) est emmanché sur ou intégré dans une extension radiale tubulaire et cylindrique (94) du moyeu (90), dans laquelle la partie d'emplanture (91) du bras souple (89) est retenue par une broche diamétrale (93) dont l'axe est sensiblement dans le plan de rotation du rotor.

49. Rotor selon l'une des revendications 43 à 48 , en particulier rotor anti-couple d'hélicoptère, dont le corps de moyeu (95) tubulaire est lié en rotation, par des cannelures internes (102), à un premier tronçon d'arbre tubulaire (103) à cannelures externes (104), qui coulisse axialement dans le corps de moyeu (95) et dont l'extrémité, du côté opposé à l'arbre rotor (98), dépasse du corps de moyeu (95) et est solidaire d'un plateau de commande (109), à bras radiaux (113) en nombre égal au nombre des pales (81) et sur chacun desquels s'articule une extrémité (114) d'un levier de commande de pas (115) dont l'autre extrémité (116) sollicite la manchette (87), le plateau de commande (109) étant lié par une butée à billes (110) à un arbre de commande (111) non rotatif, coaxial à l'arbre rotor (98) et au premier tronçon d'arbre tubulaire (103), et monté coulissant axialement dans ce dernier, caractérisé en ce que le moyeu (90) comprend un second tronçon d'arbre tubulaire (96), engagé coaxialement dans le corps de moyeu (95), auquel il est solidarisé par vissage (99) d'une bride radiale externe (97) de ce second tronçon (96) contre une extrémité du corps de moyeu (95), les cannelures internes (102) étant présentées à l'intérieur du second tronçon d'arbre tubulaire (96) qui est traversé par le premier tronçon d'arbre tubulaire (103).

50. Rotor selon la revendication 49, caractérisé en ce que l'extrémité interne du longeron (82) de la pale (81) est en forme de fourche (82a, 82b) entre les branches (122a, 122b) de laquelle est engagée l'extrémité externe (124), de préférence entourée d'une douille de protection, du bras souple (89) relié au longeron (82) de la pale (81) par une broche amovible (125), d'axe perpendiculaire à l'axe longitudinal (XX) commun au longeron (82) et au bras souple (89), et s'étendant dans le plan de rotation du rotor.

51. Rotor selon l'une des revendications 43 à 48, en particulier rotor principal d'hélicoptère, dont le mât rotor (188) porte une butée basse (192) de battement des pales (171) aux vitesses faible ou nulle du rotor, du type à anneau réciproque (193), coopérant avec une butée basse (224) solidaire de chaque pale (171), caractérisé en ce que l'extrémité externe (179a), de préférence surépaissie, du bras souple (179), et l'extrémité externe (178), sensiblement cylindrique, de la manchette tubulaire (177), essentiellement tronconique, sont liées par au moins une broche (176) perpendiculaire au plan de rotation du rotor, à une chape radiale interne (173) d'une pièce de liaison (172) conformée en double chape radiale externe (174) liée au pied de la pale (171) correspondante par deux broches (175), perpendiculaires au plan de rotation du rotor, et dont l'une est amovible pour permettre, autour de l'autre, formant pivot, la rotation de la pale (171) par rapport au bras souple (179) et à la manchette (177).

52. Rotor selon l'une des revendications 39 à 51, caractérisé en ce que le levier de commande de pas est articulé sur une chape (206) fixée à un talon latéral (223) du support rigide externe (211) ou de la chemise externe (222) de ce support du dispositif de palier combiné (210).

**Patentansprüche**

1. Kombinierte Trimm-Lagervorrichtung (40) mit elastischer Rückstellung gegen Luftwiderstandsbewegungen und Schlagen sowie mit eingebauter Dämpfung von Luftwiderstandsbewegungen, die für die Ausrüstung eines Drehflügelflugzeugrotors mit variablem Anstellwinkel vorgesehen ist, wobei jedes Rotorblatt (1) an der Nabe (10) des Rotors durch einen verlängerten Arm gehalten wird, der eine gegen Verdrehung und Durchfederung biegsame, zur Rotationsachse (A) des Rotors im wesentlichen radial ausgerichtete Strebe (9) bildet, die die Oszillationen der Schlag- und der Luftwiderstandsbewegungen des Rotorblatts (1) ebenso wie die Winkeländerungen seines Anstellwinkels ermöglicht und die berührungslos bis in die Nähe der Nabe (10) von einer röhrenförmigen, gegen Verdrehung und Durchfederung starren, außen durch einen Hebel (35) zur Steuerung des Anstellwinkels des Rotorblatts (1) belasteten Manschette (7) umgeben ist und deren der Rotorachse (A) am nächsten liegendes Ende zur Verbindung mit der Nabe (10) mit Hilfe der kombinierten Lagervorrichtung (40) dient, die dazu vorgesehen ist, den Fuß (11) des biegsamen Arms (9) über der Nabe (10) zu umgeben, und ein zur Achse (XX) des biegsamen Arms (9) zentriertes Kugelgelenklager umfaßt und die mindestens ein im wesentlichen die Form eines Kugelkappenteils bildendes Element (42) aus einem viskoelastischen Material mit hoher Verformungsremanenz enthält, das zwischen zwei starren Auflagen (41, 43) gehalten ist, von denen die eine (41), ringförmige, der Verbindung mit der Manschette (7) und die andere (43) der Verbindung mit der Nabe (10) dienen, wobei das Kugelgelenklager einen relativen Winkelbewegungsspielraum des Rotorblatts (1) beim Schlagen und bei der Luftwiderstandsbewegung um seine Mitte (C) herum durch Scherbeanspruchung des viskoelastischen Materials (42) erlaubt, das eine elastische Rückstellung des Rotorblatts (1) beim Schlagen und bei der Luftwiderstandsbewegung sowie eine Dämpfung von Winkelbewegungen des Rotorblatts bei Luftwiderstandsbewegungen sicherstellt, dadurch gekennzeichnet, daß die kombinierte Lagervorrichtung (40) außerdem ein zylindrisches Gleitlager (45, 46) eines Gelenks für die Trimmlage und den Einbau auf der Nabe (10) aufweist, das mit der der Verbindung mit der Nabe (10) dienenden starren Auflage (43) des Kugelgelenklagers verbunden ist und das im wesentlichen konzentrisch zur anderen starren Auflage (41) des Kugelgelenklagers ist, welches selbst konzentrisch zum zylindrischen Gleitlager (45, 46) eingebaut ist, das in radialer Richtung bezüglich der Achse (XX) des biegsamen Arms (9) in Reihe mit diesem letzteren angeordnet ist.

2. Kombinierte Lagervorrichtung nach Anspruch 1, dadurch gekennzeichnet, daß das Kugelgelenklager (131, 132, 133) frei verschieblich mit axialem Spiel (129, 127), das parallel zur Achse (XX) durch das zylindrische Gleitlager (126, 135) begrenzt ist, eingebaut ist.

3. Kombinierte Lagervorrichtung nach einem der Ansprüche 1 und 2, die zur Verbindung mit der Manschette (7) durch diejenige der zwei starren Auflagen (41, 43) vorgesehen ist, die sich in radial äußerer Position (41) auf dem Kugelgelenklager befindet, dadurch gekennzeichnet, daß die andere, in der radial inneren Position befindliche, starre Auflage (43) des Kugelgelenklagers mit dem zylindrischen Gleitlager (45, 46) verbunden ist, welches ein trockenes Lager ist, das vom Kugelgelenklager umgeben ist und eine zylindrische Hülse (46) umfaßt, die zum Einbau auf die Nabe (10) vorgesehen ist und um die herum die innere starre Auflage (43) über mindestens zwei selbstschmierende Ringe (45) geführt rotiert, die in Richtung der Achse (XX) der Hülse (46) mit Abstand angeordnet sind und von denen jeder sich in einer ringförmigen Halterille befindet, die an der radialen Innenseite der inneren starren Auflage (43) ausgespart ist.

4. Kombinierte Lagervorrichtung nach Anspruch 3, dadurch gekennzeichnet, daß jeder selbstschmierende Ring (55) aus zwei Halbringen (55a, 55b) von halbzylindrischer Form besteht, die sich in derselben ringförmigen Halterille befinden.

5. Kombinierte Lagervorrichtung nach einem der Ansprüche 1 bis 4, dadurch gekennzeichnet, daß sie außerdem eine Vorrichtung zur automatischen Spielverringerung (59, 66, 78, 56, 57) des zylindrischen Gleitlagers (55, 46) umfaßt.

6. Kombinierte Lagervorrichtung nach Anspruch 5, dadurch gekennzeichnet, daß die Vorrichtung zur automatischen Spielverringerung eine hydraulische Vorrichtung ist, die wenigstens eine Ausgleichskammer (59) umfaßt, die mit einer hydraulischen, durch wenigstens einen Mechanismus zur Druckbeaufschlagung (66) unter Druck gesetzten Flüssigkeit gefüllt ist und mit jeder der ringförmigen Halterillen in Verbindung steht, wobei sich zwischen dem entsprechenden Ring (55) und dem Boden der Rille wenigstens eine Röhrenleitung (78) derart befindet, daß die Spielverringerung durch diametrale Verschiebung der Ringe (55) unter der Wirkung des Drucks der hydraulischen Flüssigkeit in jeder Ausgleichskammer (59) bewirkt wird.

7. Kombinierte Lagervorrichtung nach Anspruch 6, dadurch gekennzeichnet, daß jeder Ring (55) dicht mit jeder der zwei Seitenflächen der ringförmigen Rille, in der er aufgenommen ist, durch eine ringförmige, biegsame, vorzugsweise elastisch verformbare, Dichtung (56) verbunden ist.

8. Kombinierte Lagervorrichtung nach Anspruch 7, dadurch gekennzeichnet, daß jeder Ring (55a, 55b) in eine biegsame und ringförmige Dichtung mit U-förmigem Querschnitt (76) eingefügt ist, die sich in der entsprechenden Halterille befindet, mit deren Seitenflächen die Schenkel (79) der U-förmigen Dichtung (76) verbunden sind, während die Basis (80) der U-förmigen Dichtung (76) zwischen dem Ring (55a, 55b) und dem Boden der Rille nicht mit letzterem fest verbunden ist, in den mindestens die Röhrenleitung (78) mündet, die mit der mindestens einen hydraulischen Ausgleichskammer (59) in Verbindung steht.

9. Kombinierte Lagervorrichtung nach einem der Ansprüche 4 bis 8, dadurch gekennzeichnet, daß jeder Halbring (55a, 55b) an seinen beiden Enden mit den zwei Enden des anderen Halbrings (55b, 55a), der sich in der gleichen Halterille befindet, über zwei biegsame, vorzugsweise elastisch verformbare, Verbindungselemente (77) in Verbindung steht.

10. Kombinierte Lagervorrichtung nach Anspruch 9 in Verbindung mit Anspruch 8, dadurch gekennzeichnet, daß jedes der zwei biegsamen Verbindungselemente (77) einstückig mit der U-förmigen Dichtung (76) ist, dessen beide Schenkel (79) es miteinander verbindet.

11. Kombinierte Lagervorrichtung nach einem der Ansprüche 7 bis 10, dadurch gekennzeichnet, daß die Dichtungen (76) und biegsamen Verbindungselemente (77) Teile aus einem viskoelastischen Material, wie einem Elastomer, und vorzugsweise aus demselben wie jenem des oder der viskoelastischen Teile (52) des Kugelgelenklagers sind.

12. Kombinierte Lagervorrichtung nach einem der Ansprüche 6 bis 11, dadurch gekennzeichnet, daß der Mechanismus zur Druckbeaufschlagung der hydraulischen Flüssigkeit jeder Ausgleichskammer (59) wenigstens eine biegsame, vorzugsweise elastisch verformbare, Membran (66) umfaßt, die wenigstens teilweise die Ausgleichskammer (59) begrenzt.

13. Kombinierte Lagervorrichtung nach Anspruch 12, dadurch gekennzeichnet, daß die biegsame Membran jeder Ausgleichskammer (59) eine dichte Blase (66) ist, die sich in der entsprechenden Ausgleichskammer (59) befindet und durch ein von der Außenseite des Lagers (40') her zugängliches Gaszufuhrventil (71) aufblasbar ist.

14. Kombinierte Lagervorrichtung nach einem der Ansprüche 6 bis 13, dadurch gekennzeichnet, daß die hydraulische Vorrichtung zur Spielverringerung wenigstens teilweise in das Kugelgelenklager (51, 52, 53) integriert ist, wobei die wenigstens eine Ausgleichskammer (59) wenigstens teilweise zwischen den starren inneren (53) und äußeren (51) Auflagen und/oder in einer Aussparung wenigstens der einen (51) der starren Auflagen des Kugelgelenks abgegrenzt ist und die Dichtigkeit der Ausgleichskammer (59) durch wenigstens ein aus viskoelastischem Material bestehendes Element (52) sichergestellt ist.

15. Kombinierte Lagervorrichtung nach einem der Ansprüche 1 bis 5, dadurch gekennzeichnet, daß das Kugelgelenk ein einziges Element aus viskoelastischem Material (42) umfaßt, das als ein Streifen aus Elastomer mit großer Hysterese in Form einer Kugelkappe ausgebildet ist, der durch seine radialen inneren und äußeren, konkaven beziehungsweise konvexen Flächen an die radialen äußeren konvexen beziehungsweise inneren konkaven Flächen der starren inneren (53) beziehungsweise äußeren (51) Auflagen angeklebt ist, und daß die Hülse (46) des zylindrischen Gleitlagers einen radialen inneren Flansch (47) aufweist, der zum Anschrauben (48) an einen radialen äußeren Flansch (49) einer Steckhülse (12) zur Befestigung des Fußes (11) des zugehörigen biegsamen Arms (9) an der Nabe (10) dient.

16. Kombinierte Lagervorrichtung nach einem der Ansprüche 1 bis 15, dadurch gekennzeichnet, daß sie des weiteren eine hydraulische Dämpfungsvorrichtung für die Winkelbewegungen des angetriebenen Rotorblatts (1) umfaßt, die in radialer Richtung seriell mit dem zylindrischen Gleitlager (55, 46) angebracht ist, wobei die Dämpfungsvorrichtung von einem Rotationstyp ist und koaxial zueinander einen Stator (53) und einen Rotor (51), die zwischen sich wenigstens eine innere Dämpfungskammer (58) abgrenzen, die mit einer hydraulischen Flüssigkeit, wie einem Silikonöl mit hoher Viskosität, gefüllt ist, und wenigstens eine Schaufel (60) enthält, die mit dem Rotor (51) oder dem Stator (53) einstückig ausgebildet ist und die die innere Kammer (58) in zwei Dämpfungskammern (58a, 58b) unterteilt, die miteinander durch Mittel zum Fließen verbunden sind, so daß die gesamte relative Drehbewegung des Rotors (51) und des Stators (53) um ihre gemeinsame Achse (XX) eine Rotation der Schaufel (60) in der inneren Kammer (58) bewirkt, wodurch eine der zwei Dämpfungskammern (58a, 58b) komprimiert und in der anderen eine Druckminderung hervorgerufen, und auf diese Weise eine Dämpfung der Rotationsbewegung durch Fließen der von der komprimierten Dämpfungskammer (58a, 58b) zur entspannten Dämpfungskammer (58b, 58a) zirkulierenden Flüssigkeit durch die Mittel zum Fließen hindurch erzielt wird, wobei der Stator einstückig mit der starren Auflage (53) des Kugelgelenks, die mit dem zylindrischen Gleitlager (55, 46) verbunden ist, und der Rotor einstückig mit der starren Auflage (51) des Kugelgelenks, die der festen Verbindung mit der zugehörigen rohrförmigen Manschette (7) dient, ausgebildet sind.

17. Kombinierte Lagervorrichtung nach Anspruch 16, dadurch gekennzeichnet, daß die Mittel zum Fließen mit der Schaufel (60) verbunden sind.

18. Kombinierte Lagervorrichtung nach Anspruch 17, dadurch gekennzeichnet, daß die Mittel zum Fließen durch einen engen Durchlaß gebildet sind, der von dem freien Ende der durch den Rotor (51) oder den Stator (53) getragenen Schaufel (60) und einer gegenüberliegenden Fläche auf dem Stator oder dem Rotor (51) begrenzt ist.

19. Kombinierte Lagervorrichtung nach einem der Anspüche 16 bis 18, dadurch gekennzeichnet, daß die Dichtigkeit jeder inneren Kammer (58) der Dämpfungsvorrichtung durch wenigstens ein Element (52) aus viskoelastischem Material sichergestellt ist, das den Rotor (51) mit dem Stator (53) verbindet und mit einer inneren Dämpfung eine elastische Rückstellung des Rotors (51) in Richtung seiner Anfangsposition in Bezug auf den Stator (53) bewirkt.

20. Kombinierte Lagervorrichtung nach einem der Ansprüche 16 bis 19, dadurch gekennzeichnet, daß jede innere Kammer (58) der hydraulischen Rotationsdämpfungsvorrichtung durch wenigstens einen verbindenden Durchlaß (65) mit wenigstens einer Kammer (59) zum Ausgleich von Ausdehnungen der durch einen Mechanismus zur Druckbeaufschlagung (66), welcher eine Beaufschlagung der Dämpfungsvorrichtung mit einem statischen Druck ermöglicht, unter Druck gesetzten, hydraulischen Flüssigkeit verbunden ist.

21. Kombinierte Lagervorrichtung nach Anspruch 20, dadurch gekennzeichnet, daß der Mechanismus zur Druckbeaufschlagung wenigstens eine biegsame, vorzugsweise elastisch verformbare, Membran (66) umfaßt, die wenigstens teilweise die zugehörige Kammer (59) zum Ausgleich von Ausdehnungen begrenzt.

22. Kombinierte Lagervorrichtung nach Anspruch 21, dadurch gekennzeichnet, daß die biegsame Membran des Mechanismus zur Druckbeaufschlagung als eine dichte Blase (66) ausgebildet ist, die sich in der zugehörigen Kammer (59) zum Ausgleich von Ausdehnungen befindet und durch ein von der Außenseite des Lagers (40') her zugängliches Gaszufuhrventil (69) aufblasbar ist.

23. Kombinierte Lagervorrichtung nach einem der Ansprüche 20 bis 22, dadurch gekennzeichnet, daß der bzw. die verbindenden Durchlässe (65) zwischen einer Kammer (59) zum Ausgleich von Ausdehnungen und einer inneren Kammer der Dämpfungsvorrichtung (58) dergestalt bemessen ist bzw. sind, daß ein dynamisches Filter für die Betriebsfrequenzen der Dämpfungsvorrichtung gebildet wird.

24. Kombinierte Lagervorrichtung nach einem der Ansprüche 20 bis 23, dadurch gekennzeichnet, daß wenigstens eine Kammer (59) zum Ausgleich von Ausdehnungen und ihr Mechanismus zur Druckbeaufschlagung (66), vorzugsweise mit aufblasbarer Blase, gleichzeitig jeweils eine Ausgleichskammer der hydraulischen Vorrichtung zur automatischen Spielverringerung und deren Mechanismus zur Druckbeaufschlagung, vorzugsweise mit aufblasbarer Blase, bilden.

25. Kombinierte Lagervorrichtung nach Anspruch 24, dadurch gekennzeichnet, daß die Röhrenleitung bzw. die Röhrenleitungen (78), die eine Ausgleichskammer (59) mit einer Halterille eines Rings (55) des zylindrischen Gleitlagers verbindet bzw. verbinden, dergestalt bemessen ist bzw. sind, daß ein dynamisches Filter für die Betriebsfrequenzen der Dämpfungsvorrichtung gebildet wird.

26. Kombinierte Lagervorrichtung nach einem der Ansprüche 20 bis 25, dadurch gekennzeichnet, daß die Dichtigkeit der Kammer (59) zum Ausgleich von Ausdehnungen durch wenigstens ein aus viskoelastischem Material gebildetes Element (52) des Kugelgelenks (51, 52, 53) sichergestellt ist.

27. Kombinierte Lagervorrichtung nach Anspruch 26, dadurch gekennzeichnet, daß die hydraulische Dämpfungsvorrichtung (51, 52, 53, 60) wenigstens teilweise in das Kugelgelenklager (51, 52, 53) integriert ist, wobei wenigstens eine innere Kammer (58) der Dämpfungsvorrichtung wenigstens teilweise zwischen den starren inneren (53) und äußeren (51) Auflagen und/oder in einer Aussparung wenigstens der einen (51) der starren Auflagen des Kugelgelenks abgegrenzt gebildet ist.

28. Kombinierte Lagervorrichtung nach Anspruch 27, dadurch gekennzeichnet, daß der Stator, der Rotor und wenigstens eine diese miteinander verbindende Einrichtung aus viskoelastischem Material jeweils durch die starre innere Auflage (53), die starre äußere Auflage (51) und wenigstens ein aus viskoelastischem Material gebildetes Element (52) des Kugelgelenks gebildet werden.

29. Kombinierte Lagervorrichtung nach Anspruch 28, dadurch gekennzeichnet, daß die hydraulische Rotationsdämpfungsvorrichtung zwei Schaufeln (60) zum Fließen umfaßt, die bezüglich der Achse des zylindrischen Gleitlagers (XX) radial und zueinander symmetrisch sind, und die einstückig mit der inneren Auflage (53) des Kugelgelenks ausgebildet sind und die sich jeweils senkrecht zur und symmetrisch oberhalb und unterhalb der Ebene der Luftwiderstandsbewegung des zugehörigen Rotorblatts (1) erstrecken, wobei sie jeweils in einer der zwei Kammern (58) durch eine sich radial und in Umfangsrichtung in der starren äußeren Auflage (51) erstreckenden Aussparung, durch einen Teil der radialen Außenfläche der starren inneren Auflage (53), der sich gegenüber der entsprechenden Aussparung der äußeren Auflage (51) und um den unteren Teil der in diese Aussparung eingefügten Schaufel (60) herum befindet, sowie durch Teile der ringförmigen Oberfläche des oder der die zwei Auflagen miteinander verbindenden Elemente (52) aus viskoelastischem Material begrenzt sind.

30. Kombinierte Lagervorrichtung nach Anspruch 29, dadurch gekennzeichnet, daß sie zwei hydraulische Ausgleichskammern (59) umfaßt, die bezüglich der Achse (XX) des zylindrischen Gleitlagers (55, 46) und bezüglich der Ebene der Luftwiderstandsbewegung zueinander symmetrisch sind, wobei jede durch eine der zwei sich radial und in Umfangsrichtung in der starren äußeren Auflage (51) unter in Umfangsrichtung abwechselnder Positionierung zu den Aussparungen der Dämpfungsvorrichtungskammern (58) erstreckenden Aussparungen sowie durch einen beschnitt der der entsprechenden Aussparung gegenüberliegenden radialen Außenfläche der starren inneren Auflage (53) und durch Teile der ringförmigen Oberfläche des bzw. der die zwei Auflagen miteinander verbindenden Elemente (52) aus viskoelastischem Material begrenzt ist und wobei wenigstens eine Ausgleichskammer (59) mit jeder Halterille des Gleitlagers (55, 46) durch eine, vorzugsweise genau bemessene, Röhrenleitung (78) verbunden ist, die durch die starre innere Auflage (53) hindurchführt.

31. Kombinierte Lagervorrichtung nach Anspruch 30, dadurch gekennzeichnet, daß die Aussparungen der die Schaufeln (60) aufnehmenden Kammern (58) und/oder der Ausgleichskammern (59) radial nach außen durch eine äußere, abdichtend und abnehmbar auf dem äußeren Umfang der starren äußeren Auflage (51) angebrachten Abdeckung (62) abgeschlossen sind.

32. Kombinierte Lagervorrichtung nach Anspruch 31, dadurch gekennzeichnet, daß die, vorzugsweise genau bemessenen, verbindenden Durchlässe (65) zwischen einer inneren Dämpfungsvorrichtungskammer (58) und einer Ausgleichskammer (59) durch ein radiales Spiel zwischen der äußeren Abdeckung (62) und der starren äußeren Auflage (51) begrenzt sind.

33. Kombinierte Lagervorrichtung nach einem der Ansprüche 30 bis 32, dadurch gekennzeichnet, daß jede innere Dämpfungsvorrichtungskammer (58) von jeder der Ausgleichskammern (59), zwischen denen sie in Umfangsrichtung liegt, durch ein massives, einstückig mit dem bzw. den viskoelastischen, die zwei starren Auflagen miteinander verbindenden Elementen (52) ausgebildetes Klötzchen (63) aus einem Elastomer getrennt ist.

34. Kombinierte Lagervorrichtung nach einem der Ansprüche 29 bis 33, dadurch gekennzeichnet, daß das bzw. die viskoelastischen Elemente (52) des Kugelgelenks zwei ringförmige Streifen in Form einer Kugelkappe beinhalten, die lateral mit den starren Auflagen (51, 53) zwischen diesen letzteren angeordnet verklebt sind, wobei jeder auf Höhe der die Schaufeln (60) aufnehmenden Aussparungen die größte Breite aufweist.

35. Kombinierte Lagervorrichtung nach Anspruch 34, dadurch gekennzeichnet, daß die ringförmigen, elastischen Streifen (52) auf Höhe der Aussparungen der Ausgleichskammern (59) die geringste Breite aufweisen.

36. Kombinierte Lagervorrichtung nach einem der Ansprüche 29 bis 35, dadurch gekennzeichnet, daß jede Schaufel (60) abnehmbar auf dem Abschnitt der radialen Außenfläche der inneren Auflage (53) angebracht ist, der den tiefsten Teil der entsprechenden Aussparung (58) bildet.

37. Kombinierte Lagervorrichtung nach Anspruch 36, dadurch gekennzeichnet, daß die abnehmbare Befestigung jeder Schaufel (60) auf der inneren Auflage (53) durch wenigstens eine Schraube (61) erfolgt, die radial von innen her in eine Aussparung (54) eingefügt ist, welche an der radialen Innenfläche der inneren Auflage (53) zwischen zwei zylindrischen Auflageteilen herausgearbeitet ist, wobei in jeder von ihnen eine der Halterillen der Ringe (55) des zylindrischen Gleitlagers ausgespart ist.

38. Kombinierte Lagervorrichtung nach einem der Ansprüche 30 bis 37, dadurch gekennzeichnet, daß die starre äußere Auflage (51) von mindestens drei, im wesentlichen axialen, Durchgängen (70, 72, 74) durchbrochen ist, wobei jeder in eine innere Dämpfungsvorrichtungskammer (58) mündet und in einem von ihnen ein Ventil zur Füllung (71) mit einer hydraulischen Flüssigkeit angebracht ist, das von außen, vorzugsweise an der Seite der Verbindung mit der starren, rohrförmigen Manschette (7), zugänglich ist, während ein Auslaßventil (73) und eine Auslaßschraube (75) jeweils in einem weiteren (72, 74) der im wesentlichen axialen Durchgänge angebracht und von außen, vorzugsweise an der in Richtung zur Nabe (10) hin weisend vorgesehenen Seite, zugänglich sind, und wobei die starre äußere Auflage (51) von zwei weiteren, im wesentlichen axialen Durchgängen (68) durchbrochen ist, von denen jeder in eine Ausgleichskammer (59) mündet, und daß in jedem von diesen (68) ein von außen, vorzugsweise an der Seite der Verbindung mit der Manschette (7), zugängliches Ventil zum Aufblasen (69) angebracht ist.

39. Drehflügelflugzeugrotor mit variabler Steigung, verwendbar als Hubschrauberhauptrotor oder -heckrotor, der eine zur Drehung um eine Rotorrotationsachse (A) durch eine Rotorwelle (18) angetriebene Rotornabe (10) und Rotorblätter (1) aufweist, von denen jedes an der Nabe (10) mittels eines verlängerten Arms (9) gehalten wird, der eine gegen Durchfederung und Verdrehung biegsame, zur Achse (A) des Rotors im wesentlichen radial ausgerichtete Strebe bildet, die die Oszillationen der Schlag- und der Luftwiderstandsbewegungen und die Winkeländerungen des Anstellwinkels des entsprechenden Rotorblatts (1) ermöglicht und die berührungslos bis in die Nähe der Nabe (10) von einer röhrenförmigen, gegen Durchfederung und Verdrehung starren, außen durch einen Hebel (35) zur Steuerung des Anstellwinkels des entsprechenden Rotorblatts (1) belasteten Manschette (7) umgeben ist und deren der Rotorachse (A) am nächsten liegendes Ende (37) mit der Nabe (10) mit Hilfe einer kombinierten Trimm-Lagervorrichtung (40) mit elastischer Rückstellung des entsprechenden Rotorblatts (1) gegen Schlagen und Luftwiderstandsbewegungen sowie mit vorgesehener Dämpfung von Winkelbewegungen des Rotorblatts (1) bei Luftwiderstandsbewegungen verbunden ist, die den Fuß (11) des zugehörigen biegsamen Arms (9) über der Nabe (10) umgibt und ein zur Achse (XX) des biegsamen Arms zentriertes (C) Kugelgelenklager (41, 42, 43) umfaßt, das mindestens ein im wesentlichen die Form eines Kugelkappenteils bildendes Element (42) aus einem viskoelastischen Material mit großer Verformungsremanenz enthält, welches zwischen zwei starren Auflagen (51, 53) gehalten ist, von denen die eine, ringförmige (51) mit der Manschette (7) und die andere (53) mit der Nabe (10) derart verbunden sind, daß das Kugelgelenklager einen relativen Bewegungsspielraum des Rotorblatts (1) beim Schlagen und bei der Luftwiderstandsbewegung um seinen Mittelpunkt (C) herum durch Scherbeanspruchung des viskoelastischen Materials (42) erlaubt, das eine elastische Rückstellung des Rotorblatts beim Schlagen und bei der Luftwiderstandsbewegung sowie eine Dämpfung der Winkelbewegungen des Rotorblatts bei der Luftwiderstandsbewegung bewirkt, dadurch gekennzeichnet, daß die kombinierte Lagervorrichtung (40, 120, 210) eine Vorrichtung gemäß einem der vorhergehenden Ansprüche 1 bis 38 ist.

40. Rotor nach Anspruch 39, dadurch gekennzeichnet, daß das innere Ende (37) der Manschette (7) mit der kombinierten Lagervorrichtung (40) durch eine Verschraubung (39) eines im wesentlichen radialen äußeren Flanschs (38) verbunden ist, der durch die Manschette (7) gegen die starre äußere Auflage (41) der Lagervorrichtung gehalten wird.

41. Rotor nach Anspruch 40, dadurch gekennzeichnet, daß der im wesentlichen radiale äußere Flansch (118) um die äußere Auflage (131) der Lagervorrichtung (120) herum gebogen, mit einer angesetzten Hülse (117) einstückig und am inneren, rohrförmigen Ende der Manschette (87) aus Verbundwerkstoff gehalten ist und sich in Verlängerung des profilierten Körpers (83) des entsprechenden Rotorblatts (81) erstreckt.

42. Rotor nach Anspruch 40, dadurch gekennzeichnet, daß das äußere Ende (8) der Manschette (7) mit dem inneren Ende des profilierten Körpers (3) des Rotorblatts (1) durch Verschraubung eines radialen äußeren Flanschs (5) einer angesetzten Hülse (4) mit der Manschette (7) verbunden ist und im inneren, rohrförmigen Ende des profilierten Rotorblattkörpers (3) gehalten ist.

43. Rotor nach einem der Ansprüche 39 bis 42, dadurch gekennzeichnet, daß die Nabe (10) einen zentralen, rohrförmigen Körper (15) koaxial zur Rotorwelle (18) und zur Rotorachse (A) radial ausgebildete Fortsätze (14) aufweist, deren Anzahl gleich der der Rotorblätter (1) ist, um diese letzteren mit der Nabe (10) zu verbinden.

44. Rotor nach Anspruch 43, dadurch gekennzeichnet, daß die Nabe (10) mit der Rotorwelle (18) durch Verschraubung (19, 20) des Teils der radialen Erweiterungen (14), der in Richtung der Welle (18) weist, mit einem Endflansch (21) der Welle (18) verbunden ist, der zur Wellenachse (A) radial verläuft.

45. Rotor nach Anspruch 43, dadurch gekennzeichnet, daß die radialen Erweiterungen (94) und der rohrförmige Körper (95) der Nabe (90) einstückig mit dem Ende (101) der Rotorwelle (98) ausgebildet sind.

46. Rotor nach einem der Ansprüche 43 bis 45, dadurch gekennzeichnet, daß der biegsame Arm (9) in Richtung der Rotorachse (A) über die Mitte (C) der Lagervorrichtung (40) hinaus durch einen, eventuell verdickten, Teil eines Fußes (11) verlängert ist, durch den der biegsame Arm (9) an einer radialen Erweiterung (14) der Nabe (10) befestigt ist.

47. Rotor nach Anspruch 46, dadurch gekennzeichnet, daß der Teil des Fußes (11) des biegsamen Arms (9) in einer Hülse (12) mit einem radialen äußeren, auf einen radialen inneren Flansch (47) der Hülse des zylindrischen Gleitlagers (46, 45) geschraubten (48) Flansch (49) gehalten ist, wobei die Hülse (12) selbst in einer radialen Erweiterung (14) der Nabe (10) durch wenigstens einen Bolzen (13) mit einer im wesentlichen zur Rotorachse (A) parallelen Achse gehalten ist und durch die fluchtenden Bohrungen in dem Teil des Fußes (11), der Hülse (12) und der radialen Erweiterung (14) hindurchgeht.

48. Rotor nach Anspruch 46, dadurch gekennzeichnet, daß die Hülse (126) des zylindrischen Gleitlagers (135, 126) auf eine radiale rohrförmige und zylindrische Erweiterung (94) der Nabe (90) aufgesetzt oder in dieser integriert ist, in welcher der Teil des Fußes (91) des biegsamen Arms (89) durch einen diametralen Bolzen (93), dessen Achse im wesentlichen in der Rotationsebene des Rotors liegt, gehalten ist.

49. Rotor nach einem der Ansprüche 43 bis 48, insbesondere Hubschrauberheckrotor, dessen rohrfömiger Nabenkörper (95) über innere Rillen (102) mit einem ersten Teilstück einer rohrförmigen Welle (103) mit äußeren Rillen (104) beim Rotieren in Verbindung steht, welches sich in axialer Richtung im Nabenkörper (95) verschieben läßt und dessen Ende an der der Rotorwelle (98) entgegengesetzten Seite über den Nabenkörper (95) hinausragt und mit einer Steuerscheibe (109) mit radialen Armen (113) verbunden ist, deren Anzahl gleich der der Rotorblätter (81) ist und auf denen jeweils ein Ende (114) eines Hebels zur Steuerung des Anstellwinkels (115) gelenkig angebracht ist, dessen anderes Ende (116) die Manschette (87) belastet, wobei die Steuerscheibe (109) durch ein Axialkugellager (110) mit einer nicht drehbaren Steuerwelle (111) verbunden ist, die koaxial zur Rotorwelle (98) und zum ersten rohrförmigen Teilstück der Welle (103) verläuft und axial in diesem letzteren verschiebbar angebracht ist, dadurch gekennzeichnet, daß die Nabe (90) ein zweites rohrförmiges Wellenteilstück (96) umfaßt, das koaxial in den Nabenkörper (95) eingefügt ist, mit dem es durch Verschraubung (99) eines radialen äußeren Flanschs (97) dieses zweiten Teilstücks (96) an einem Ende des Nabenkörpers (95) befestigt ist, wobei die inneren Rillen (102) im Inneren des zweiten rohrfömigen Wellenteilstücks (96) vorgesehen sind, durch das das erste rohrförmige Wellenteilstück (103) hindurchgeht.

50. Rotor nach Anspruch 49, dadurch gekennzeichnet, daß das innere Ende des Längsträgers (82) des Rotorblatts (81) in Form einer Gabel (82a, 82b) ausgebildet ist, zwischen deren Schenkeln (122a, 122b) das äußere Ende des biegsamen Arms (89), vorzugsweise von einer Schutzhülse umgeben, eingefügt ist, der mit dem Längsträger (82) des Rotorblatts (81) durch einen lösbaren Bolzen (125) mit einer Achse senkrecht zur gemeinsamen longitudinalen Achse (XX) von Längsträger (82) und biegsamem Arm (89) verbunden ist und sich in der Rotationsebene des Rotors erstreckt.

51. Rotor nach einem der Ansprüche 43 bis 48, insbesondere Hubschrauberhauptrotor, dessen Rotormast (188) ein unteres Widerlager (192) für das Schlagen der Rotorblätter (171) bei geringen Drehgeschwindigkeiten oder Drehgeschwindigkeit Null des Rotors in Form eines Gegenrings (193) trägt, der mit einem einstückig an jedem Rotorblatt (171) ausgebildeten unteren Widerlager (224) zusammenwirkt, dadurch gekennzeichnet, daß das äußere, vorzugsweise verdickte, Ende (179a) des biegsamen Arms (179) und das äußere, im wesentlichen zylindrische Ende (178) der rohrförmigen, im wesentlichen kegelstumpfartigen, Manschette (177) durch wenigstens einen zur Rotationsachse des Rotors senkrechten Bolzen (176) mit einer radialen inneren Abdeckung (173) eines Stücks der Verbindung (172) verbunden sind, die als radiale äußere Doppelabdeckung (174) gestaltet ist, welche mit dem Fuß des zugehörigen Rotorblatts (171) durch zwei zur Rotationsebene des Rotors senkrechte Bolzen (175) verbunden ist und von denen der eine lösbar ist, um die Verdrehung des Rotorblatts (171) in Bezug auf den biegsamen Arm (179) und die Manschette (177) um den anderen, den Drehpunkt bildenden, Bolzen herum zu erlauben.

52. Rotor nach einem der Ansprüche 39 bis 51, dadurch gekennzeichnet, daß der Hebel zur Steuerung des Anstellwinkels gelenkig an einer Gabel (206) angebracht ist, die an einem lateralen Ansatz (223) der starren äußeren Auflage (211) oder der äußeren Abdeckung (222) dieser Auflage der kombinierten Lagervorrichtung (210) befestigt ist.

## Claims

1. Combined angle of attack bearing device (40), with resilient return under drag and flapping conditions and with incorporated drag damping, for equipping a variable pitch rotor of a rotary wing aircraft, in which each blade (1) is held on the hub (10) of the rotor by means of an elongate arm forming a tie rod (9) which is flexible in twisting and bending, substantially radial with respect to the axis (A) of rotation of the rotor, which allows flapping and drag oscillations of the blade (1) as well as angular variations in its pitch, and which is surrounded without contact, as far as the vicinity of the hub (10) by a tubular stub sleeve (7) which is rigid in twisting and bending, acted on externally by a lever (35) controlling the pitch of the blade (1), and of which the end nearest to the axis (A) of the rotor is intended to be connected to the hub (10) by the said combined bearing device (40), which is intended to surround the root (11) of the flexible arm (9) on the hub (10) and which includes a spherical ball joint articulation centred on the axis (XX) of the flexible arm (9) and having at least one element (42) of a visco-elastic material with high deformation remanence, substantially in the form of a spherical cap portion, which is retained between two rigid supports (41,43), of which one (41), of annular form, is intended to be rigidly fixed to the stub sleeve (7) and the other (43) is intended to be connected to the hub (10), the spherical ball joint articulation permitting, about its centre (C), a relative freedom of angular movement of the blade (1) under flapping and drag conditions, by shearing of the visco-elastic material (42) which ensures resilient return of the blade (1) under flapping and drag conditions as well as damping of the angular movements of the blade (1) in drag conditions, the said combined bearing device (40) being characterised in that it further comprises a plain cylindrical bearing (45,46) for angle of attack articulation and mounting on the hub (10), which is connected to the rigid support (43) of the spherical ball joint articulation, intended to be connected to the hub (10), and which is substantially concentric with the other rigid support (41) of the spherical ball joint articulation, itself mounted concentrically with respect to the plain cylindrical bearing (45,46) which is radially in series with the latter with respect to the axis (XX) of the flexible arm (9).

2. Combined bearing device according to Claim 1, characterised in that the spherical ball joint articulation (131, 132, 133) is mounted for free translational movement with limited axial clearance (129,127) parallel to the axis (XX) of the plain cylindrical bearing (126,135).

3. Combined bearing device according to either of Claims 1 and 2, intended to be rigidly fixed to the stub sleeve (7) by that one of two rigid supports (41,43) which is in an outer radial position (41) on the spherical ball joint articulation, characterised in that the other rigid support (43), in an inner radial position, of the spherical ball joint articulation is connected to the plain cylindrical bearing (45,46), which is a dry bearing, surrounded by the spherical ball joint articulation, and comprising a cylindrical sleeve (46) intended to be fixed on the hub (10) and about which the inner rigid support (43) is journalled by means of at least two self-lubricating bushes (45) spaced from each other along the axis (XX) of the sleeve (46), and each housed in an annular holding groove formed in the inner radial face of the inner rigid support (43).

4. Combined bearing device according to Claim 3, characterised in that each self-lubricating bush (55) comprises two half-bushes (55a,55b) of semi-cylindrical shape and housed in the same annular holding groove.

5. Combined bearing device according to one of Claims 1 to 4, characterised in that it also comprises a device for automatically taking up the play (59,66,78, 56,57) of the plain cylindrical bearing (55,46)

6. Combined bearing device according to Claim 5, characterised in that the automatic play take-up device is a hydraulic device comprising at least one compensation chamber (59) filled with a hydraulic fluid pressurised by at least one pressurisation mechanism (66) and in communication with each of the annular holding grooves, between the corresponding bush (55) and the bottom of the groove, by at least one duct (78), so that the play is taken up by diametrical movement of the bushes (55) under the action of the pressure of the hydraulic fluid in each compensation chamber (59).

7. Combined bearing device according to Claim 6, characterised in that each bush (55) is connected sealingly to each of the two lateral faces of the annular groove in which it is housed by means of a flexible annular seal (56), preferably elastically deformable.

8. Combined bearing device according to Claim 7, characterised in that each bush (55a, 55b) is engaged in a flexible annular seal having a U-shaped cross-section (76) housed in the corresponding holding groove, to the lateral faces of which the wings (79) of the U-shaped seal (76) are secured, while the base (80) of the U-shaped seal (76), between the bush (55a,55b) and the bottom of the groove, is not secured to this groove bottom, into which at least one duct (78) opens for communicating with at least one hydraulic compensation chamber (59).

9. Combined bearing device according to one of Claims 4 to 8, characterised in that each half-bush (55a,55b) is connected by both ends to the two ends of the other half-bush (55b,55a) housed in the same holding groove by two flexible connections (77), preferably elastically deformable.

10. Combined bearing device according to Claim 9, as attached to Claim 8, characterised in that each of the two flexible connections (77) is secured to the U-shaped seal (76), the wings (79) of which it connects together.

11. Combined bearing device according to one of Claims 7 to 10, characterised in that the seals (76) and flexible connections (77) are elements made from a visco-elastic material, such as an elastomer, and preferably the same as that of the visco-elastic element or elements (52) of the spherical ball joint articulation,

12. Combined bearing device according to one of Claims 6 to 11, characterised in that the mechanism for pressurising the hydraulic fluid in each compensation chamber (59) comprises at least one flexible membrane (66), preferably elastically deformable, at least partially defining the said compensation chamber (59).

13. Combined bearing device according to Claim 12, characterised in that the flexible membrane of each compensation chamber (59) is a sealed bladder (66) housed in the corresponding compensation chamber (59) and inflatable by means of a gas supply valve (71), which is accessible from outside the bearing (40′).

14. Combined bearing device according to one of Claims 6 to 13, characterised in that the hydraulic play take-up device is at least partially integrated in the spherical ball joint articulation (51,52,53), at least one compensation chamber (59) being at least partially defined between the inner (53) and outer (51) rigid supports and/or in a recess of at least one (51) of the rigid supports of the spherical ball joint, and the compensation chamber (59) being sealed by at least one visco-elastic material element (52) of the spherical ball joint.

15. Bearing device according to one of Claims 1 to 5, characterised in that the spherical ball joint comprises a single visco-elastic material element (42), which is a strip of high hysteresis elastomer, in the form of a spherical cap bonded by its internal and external radial faces, respectively concave and convex, to the respectively convex external and concave internal radial faces of the respectively inner (53) and outer (51) rigid supports, and the sleeve (46) of the plain cylindrical bearing has an internal radial flange (47) intended to be bolted (48) onto an external radial flange (49) of a sleeve (12) for fixing the root (11) of the corresponding flexible arm (9) onto the hub (10).

16. Combined bearing device according to one of Claims 1 to 15, characterised in that it further comprises a hydraulic damper for damping the angular movements of the blade (1) under drag conditions, mounted in radial series with the plain cylindrical bearing (55,46), the damper being of the rotation type, with coaxial stator (53) and rotor (51) defining between them at least one internal damper chamber (58) filled with a hydraulic fluid such as a high viscosity silicon oil, and at least one vane (60) rigidly fixed to the rotor (51) or the stator (53) and subdividing the internal chamber (58) into two damping chambers (58a,58b) connected together by constricting means, so that any relative rotational movement of the rotor (51) and the stator (53) about their common axis (XX) causes rotation of the vane (60) in the internal chamber (58), while compressing one of the two damping chambers (58a, 58b) and causing an expansion in the other one, thus providing damping of the rotational movement by constriction, through the constricting means, of the fluid flowing from the compressed damping chamber (58a,58b) towards the expanded damping chamber (58b,58a), the stator being rigidly fixed to the rigid support (53) of the spherical ball joint, which is connected to the plain cylindrical bearing (55,46) and the rotor being rigidly fixed to the rigid support (51) of the spherical ball joint, which is intended to be rigidly fixed to the corresponding tubular stub sleeve (7).

17. Combined bearing device according to Claim 16, characterised in that the constricting means are associated with the vane (60).

18. Combined bearing device according to Claim 17, characterised in that the constricting means are formed by a narrow passage defined between the free end of the vane (60) carried by the rotor (51) or the stator (53) and a facing surface on the stator (53) or the rotor (51).

19. Combined bearing device according to one of Claims 16 to 18, characterised in that each internal chamber (58) of the damper is sealed by at least one member (52) of visco-elastic material connecting the rotor (51) to the stator (53) and providing, with internal damping, resilient return of the rotor (51) towards its initial position with respect to the stator (53).

20. Combined bearing device according to one of Claims 16 to 19, characterised in that each internal chamber (58) of the hydraulic rotation damper is connected by at least one communication passage (65) to at least one chamber (59) for compensating the expansion of the hydraulic fluid which is pressurised by a pressurisation mechanism (66) providing static pressurisation of the damper.

21. Combined bearing device according to Claim 20, characterised in that the pressurisation mechanism comprises at least one flexible membrane (66),preferably elastically deformable, which at least partially defines the corresponding expansion compensation chamber (59).

22. Combined bearing device according to Claim 21, characterised in that the flexible membrane of the pressurisation mechanism is a sealed bladder (66) housed in the corresponding expansion compensation chamber (59) and inflatable by means of a gas supply valve (69) accessible from outside the bearing (40').

23. Combined bearing device according to one of Claims 20 to 22, characterised in that the communication passage or passages (65) between one expansion compensation chamber (59) and an internal chamber of the damper (58) is or are calibrated so as to form a dynamic filter for the operating frequencies of the damper.

24. Combined bearing device according to one of Claims 20 to 23, characterised in that at least one expansion compensation chamber (59), and its pressurisation mechanism (66), preferably comprising an inflatable bladder, simultaneously and respectively form a compensation chamber of the automatic hydraulic play take-up device and its pressurisation mechanism, preferably including an inflatable bladder.

25. Combined bearing device according to Claim 24, characterised in that the duct or ducts (78) connecting a compensation chamber (59) to a groove for holding a bush (55) of the plain cylindrical bearing is or are calibrated so as to form a dynamic filter for the operating frequencies of the damper.

26. Combined bearing device according to one of Claims 20 to 25, characterised in that the sealing of the expansion compensation chamber (59) is provided by means of at least one visco-elastic material element (52) of the spherical ball joint (51,52,53).

27. Combined bearing device according to Claim 26, characterised in that the hydraulic damper (51,52,53,60) is at least partially integrated in the spherical ball joint articulation (51,52,53), at least one internal chamber (58) of the damper being at least partially defined between the inner (53) and outer (51) rigid supports and/or in a recess in at least one (51) of the rigid supports of the spherical ball joint.

28. Combined bearing device according to Claim 27, characterised in that the stator, the rotor and at least one visco-elastic material member which joins them together are formed respectively by the inner rigid support (53), the outer rigid support (51) and at least one visco-elastic material element (52) of the spherical ball joint.

29. Combined bearing device according to Claim 28, characterised in that the hydraulic rotation damper comprises two radial constricting vanes (60), symmetrical with each other with respect to the axis (XX) of the plain cylindrical bearing, and which are rigidly fixed to the inner support (53) of the spherical ball joint and each extend perpendicularly to the drag plane and symmetrically above and below the drag plane of the corresponding blade (1), into one of two chambers (58) each defined by a recess extending radially and in the circumferential direction in the outer rigid support (51), by a part of the external radial surface of the inner rigid support (53) which is facing the corresponding recess of the outer support (51) and about the foot of the vane (60) engaged in this recess, and by annular surface portions of the visco-elastic material element or elements (52) connecting the two supports to each other.

30. Combined bearing device according to Claim 29, characterised in that it comprises two hydraulic compensation chambers (59), symmetrical with each other with respect to the axis (XX) of the plain cylindrical bearing (55,46) and with respect to the drag plane, each being defined by one of two recesses extending radially and in the circumferential direction in the outer rigid support (51), in positions alternating with the recesses of the damper chambers (58) in the circumferential direction, each compensation chamber (59) being also defined by a part of the external radial surface of the inner rigid support (53) opposite the corresponding recess and by annular surface portions of the visco-elastic material element or elements (52) connecting the two supports together, at least one compensation chamber (59) being connected to each holding groove of the plain bearing (55,46) by a duct (78), preferably calibrated, which passes through the inner rigid support (53).

31. Combined bearing device according to Claim 30, characterised in that the recesses of the chambers (58, 59) housing the vanes (60) and/or for compensation are radially closed towards the outside by an external jacket (62) sealingly and removably mounted on the periphery of the outer rigid support (51).

32. Combined bearing device according to Claim 31, characterised in that the passages (65), preferably calibrated, for communication between an internal damper chamber (58) and a compensation chamber (59) are defined by a radial clearance between the external jacket (62) and the outer rigid support (51).

33. Combined bearing device according to one of Claims 30 to 32, characterised in that each internal damper chamber (58) is separated from each of the compensation chambers (59), between which it is situated in the circumferential direction, by a solid elastomer stud (63), integral with the visco-elastic element or elements (52) connecting the two rigid supports (51,53) together.

34. Combined bearing device according to one of Claims 29 to 33, characterised in that the visco-elastic element or elements (52) of the spherical ball joint comprise two annular strips in the form of a spherical cap (52) bonded laterally to the two rigid supports (51,53) and between the latter, and each of a maximum width at the level of the recesses (58) housing the vanes (60).

35. Combined bearing device according to Claim 34, characterised in that the annular visco-elastic strips (52) are of minimum width at the level of the recesses (59) of the compensation chambers.

36. Combined bearing device according to one of Claims 29 to 35, characterised in that each vane (60) is removably fixed onto the external radial surface portion of the inner support (53) which forms the bottom of the corresponding recess (58).

37. Combined bearing device according to Claim 36, characterised in that the removable fixing is provided for each vane (60) on the inner support (53) by means of at least one screw (61) engaged radially from the inside in a recess (54) formed in the internal radial face of the inner support (53), between two cylindrical bearing surfaces in each of which is formed one of the grooves for holding the bushes (55) of the plain cylindrical bearing.

38. Combined bearing device according to one of Claims 30 to 37, characterised in that the outer rigid support (51) is pierced by at least three substantially axial passages (70,72,74) each opening into an internal damper chamber (58) and in one of which is fitted a hydraulic fluid filling valve (71), which is accessible from the outside, preferably on the same side as the connection to the rigid tubular stub sleeve (7), while a drain valve (73) and a drain screw (75) are each fitted in another (72,74) of the substantially axial passages, and are accessible from the outside, preferably on the side intended to be turned towards the hub (10), the outer rigid support (51) being further pierced by two other substantially axial passages (68), each opening into a compensation chamber (59), and in each of which is fitted an inflation valve (69), accessible from the outside, preferably on the same side as the connection to the stub sleeve (7).

39. Variable pitch rotor for rotary-wing aircraft, that can be used as the main rotor or as the rear rotor for helicopters, comprising a rotor hub (10), driven in rotation about an axis (A) of rotation of the rotor by a rotor shaft (18), blades (1), each of which is retained on the hub (10) by means of an elongate arm (9) forming a tie rod, flexible in twisting and bending conditions, and substantially radial with respect to the axis (A) of the rotor, which allows the flapping and drag oscillations and angular variations in pitch of the corresponding blade (1), and which is surrounded without contact, as far as the vicinity of the hub (10), by a tubular stub sleeve (7) rigid under bending and twisting conditions, acted on externally by a lever (35) controlling the pitch of the corresponding blade (1), and of which the end (37) nearest to the rotor axis (A) is connected to the hub (10) by a combined angle of attack bearing device (40), with resilient return of the corresponding blade (1) under flapping and drag conditions, and with incorporated damping of the angular movements of the blade (1) under drag conditions, which surrounds the root (11) of the corresponding flexible arm (9) on the hub (10), and which comprises a spherical ball joint articulation (41,42,43) centred (C) on the axis (XX) of the flexible arm and having at least one visco-elastic material element (42) with high deformation remanence, substantially in the form of a spherical cap portion, which is retained between two rigid supports (51,53), of which one, of annular shape (51), is rigidly fixed to the stub sleeve (7), and the other (53) of which is connected to the hub (10), so that the spherical ball joint articulation allows, about its centre (C), a relative freedom of movement of the blade (1) under flapping and drag conditions, by shearing of the visco-elastic material (42), which provides resilient return of the blade under flapping and drag conditions, as well as damping of the angular movements of the blade under drag conditions, characterised in that the combined bearing device (40,120,210) is a device according to one of the preceding claims 1 to 38.

40. Rotor according to Claim 39, characterised in that the inner end (37) of the stub sleeve (7) is rigidly fixed to the combined bearing device (40) by screwing (39) a substantially radial external flange (38) carried by the stub sleeve (7) against the outer rigid support (41) of the bearing device.

41. Rotor according to Claim 40, characterised in that the substantially radial external flange (118) is bent back about the outer support (131) of the bearing device (120) and in one piece with a socket (117) fitted and held in the tubular inner end of the stub sleeve (87), made of composite material, and in extension of the profiled shell (83) of the corresponding blade (81).

42. Rotor according to Claim 40, characterised in that the outer end (8) of the stub sleeve (7) is connected to the inner end of the profiled shell (3) of the blade (1) by screwing against the stub sleeve (7) an external radial flange (5) of a socket (4) fitted and retained in the tubular inner end of the profiled shell (3) of the blade.

43. Rotor according to one of Claims 39 to 42, characterised in that the hub (10) comprises a tubular central body (15), coaxial with the rotor shaft (18), and extensions (14) which are radial with respect to the axis (A) of the rotor, and equal in number to the number of blades (1), for connecting the latter to the hub (10).

44. Rotor according to Claim 43, characterised in that the hub (10) is rigidly fixed to the rotor shaft (18) by bolting (19,20), against an end flange (21) of the shaft (18) which is radial with respect to the axis (A) of the latter, the part of the radial extensions (14) which is turned towards the shaft (18).

45. Rotor according to Claim 43, characterised in that the radial extensions (94) and the tubular body (95) of the hub (90) are formed in one piece with the end (101) of the rotor shaft (98).

46. Rotor according to one of Claims 43 to 45, characterised in that the flexible arm (9) is extended, towards the axis (A) of the rotor, beyond the centre (C) of the bearing device (40) by a root portion (11), optionally thickened, by which the flexible arm (9) is fixed to a radial extension (14) of the hub (10).

47. Rotor according to Claim 46, characterised in that the root portion (11) of the flexible arm (9) is retained in a sleeve (12) with external radial flange (49) bolted (48) onto an internal radial flange (47) of the sleeve (46) of the plain cylindrical bearing (46,45), the sleeve (12) being itself retained in a radial extension (14) of the hub (10) by at least one pin (13) with axis substantially parallel to the axis (A) of the rotor and passing through the coinciding bores in the root portion (11), the sleeve (12) and the radial extension (14).

48. Rotor according to Claim 46, characterised in that the sleeve (126) of the plain cylindrical bearing (135,126) is fitted on or integrated in a tubular, cylindrical, radial extension (94) of the hub (90), in which the root portion (91) of the flexible arm (89) is retained by a diametrical pin (93) the axis of which is substantially in the plane of rotation of the rotor.

49. Rotor according to one of Claims 43 to 48, especially an anti-torque rotor for a helicopter, the tubular hub body (95) of which is connected for rotation, by way of internal splines (102), to a first tubular shaft section (103), with external splines (104), which slides axially in the hub body (95) and the end of which, on the side opposite to the rotor shaft (98), projects from the hub body (95) and is rigidly fixed to a control plate (109), having radial arms (113) equal in number to the number of blades (81) and on each of which there is articulated an end (114) of a pitch control lever (115), the other end (116) of which acts on the stub sleeve (87), the control plate (109) being connected by a ball thrust bearing (110) to a non-rotary control shaft (111), coaxial with the rotor shaft (98) and to the first tubular shaft section (103), and mounted so as to slide axially in the latter, characterised in that the hub (90) comprises a second tubular shaft section (96), engaged coaxially in the hub body (95), to which it is rigidly fixed by screwing (99) an external radial flange (97) of the second section (96) against an end of the hub body (95), the internal splines (102) being presented inside the second tubular shaft section (96) through which the first tubular shaft section (103) passes.

50. Rotor according to Claim 49, characterised in that the inner end of the spar (82) of the blade (81) is in the form of a fork (82a,82b) between the limbs (122a, 122b) of which is engaged the outer end (124), preferably surrounded by a protective socket, of the flexible arm (89) connected to the spar (82) of the blade (81) by a removable pin (125), with axis perpendicular to the longitudinal axis (XX) common to the spar (82) and to the flexible arm (89), and extending in the plane of rotation of the rotor.

51. Rotor according to one of Claims 43 to 48, especially a main rotor for a helicopter, the rotor mast (188) of which carries a bottom stop (192) for flapping of the blades (171) at low or zero rotor speeds, of the reciprocal ring type (193), co-operating with a bottom stop (224) rigidly fixed to each blade (171), characterised in that the outer end (179a), preferably thickened, of the flexible arm (179), and the outer end (178), substantially cylindrical, of the tubular stub sleeve (177), essentially frustoconical in shape, are connected by at least one pin (176) perpendicular to the plane of rotation of the rotor, to an internal radial fork joint (173) of a connecting piece (172) shaped as a double external radial fork joint (174) connected to the root end of the corresponding blade (171) by two pins (175), perpendicular to the plane of rotation of the rotor, and one of which is removable so as to allow rotation of the blade (171) about the other one, forming a pivot, with respect to the flexible arm (179) and the stub sleeve (177).

52. Rotor according to one of Claims 39 to 51, characterised in that the pitch control lever is articulated on a fork joint (206) fixed to a lateral heel (223) of the outer rigid support (211) or of the external jacket (222) of this support of the combined bearing device (210).

FIG. 1

EP 0 289 374 B1

FIG. 2

FIG. 3

FIG. 6

FIG. 7

34

FIG. 4

FIG. 5

EP 0 289 374 B1

FIG. 8

FIG. 10

FIG. 9

EP 0 289 374 B1

FIG. 11a

EP 0 289 374 B1

FIG. 11b

FIG. 12 a

FIG. 12 b

FIG. 14

FIG.15

FIG.13

FIG. 16

FIG. 17

43